# EUROPÄISCHE PATENTSCHRIFT

(11) **EP 1 399 631 B1**
(45) Veröffentlichungstag und Bekanntmachung des Hinweises auf die Patenterteilung: **20.10.2004**
(21) Anmeldenummer: 02745153.3
(22) Anmeldetag: 24.06.2002
(51) Int. Cl.: E04H 12/10, E04H 12/20, F03D 11/04

(54) **MEERESTECHNISCHE TRAGKONSTRUKTION, INSBESONDERE FÜR EINE OFFSHORE-WINDKRAFTANLAGE, UND VERFAHREN ZUR HERSTELLUNG EINER DERARTIGEN TRAGKONSTRUKTIONEN**
SUPPORT STRUCTURE FOR SEA-TECHNOLOGY, IN PARTICULAR FOR AN OFFSHORE WIND ENERGY INSTALLATION AND A METHOD FOR PRODUCING A SUPPORT STRUCTURE OF THIS TYPE
CONSTRUCTION PORTEUSE POUR LA TECHNOLOGIE MARINE, EN PARTICULIER POUR EOLIENNE OFFSHORE, ET PROCEDE DE REALISATION D'UNE TELLE CONSTRUCTION PORTEUSE

(30) Priorität: 24.06.2001 DE 10129811; 24.06.2001 DE 10129812; 31.12.2001 DE 10164707; 19.05.2002 DE 10222646
(43) Veröffentlichungstag der Anmeldung: 24.03.2004
(73) Patentinhaber: Falkenhagen, Joachim, 12555 Berlin (DE)
(72) Erfinder: Falkenhagen, Joachim, 12555 Berlin (DE)
(74) Vertreter: Neumann, Günter
(86) Internationale Anmeldenummer: PCT/DE2002/002336
(87) Internationale Veröffentlichungsnummer: WO 2003/001009

(56) Entgegenhaltungen:
- DE-A- 2 949 063
- DE-C- 19 860 215

## Beschreibung

Die Erfindung beschreibt eine meerestechnische Tragkonstruktion, vorzugsweise für Offshore-Windkraftanlagen, und ein Verfahren zur Herstellung einer derartigen Tragkonstruktion. Diese sind im Vergleich zu ihrem Gewicht einer relativ großen, insbesondere durch Wind und Wellengang erzeugten Momentbelastung um horizontale Achsen (Kippmomente) ausgesetzt.

Für Tragkonstruktionen und Gründungen von meerestechnischen Konstruktionen, auch von Offshore-Windkraftanlagen, werden in der Regel die folgenden technischen Lösungen verwendet:
- Schwerkraftfundamente;
- Monopfahlgründungen;
- Tripoden
- Fachwerk- bzw. Jacketkonstruktionen.

Auf diesen Lösungen beruhen auch die Tragstrukturen bisher errichteter bzw. vor der Errichtung stehender Offshore-Windkraftanlagen (u.a. Tuno Knob, Blyth harbour, Middelgrunden) und weitere Machbarkeitsstudien, etwa: Delft University of Technology, Faculty of civil engineering and geoscience, Institute for Wind Energy, OPTI-OWEC final report, volume 2, methods assisting the Design of Offshore Wind Energy Conversion Systems, Seite 5-1 und volume 4, A Typical Design Solution for an Offshore Wind Energy Conversion System, Seite 3-13 ff. und 6-8 ff., Delft 1998 ; Greenpeace (Hrsg., Verfasst durch das Deutsche Wind Energie Institut - DEWI): North Sea Offshore Wind - A Powerhouse for Europe, Abschnitt 3.4 support structures, Seite 36 ff.

In einer Studie zu Offshore-Windenergiesystemen (Vulkan-Engineering GmbH /Gesamtkoordination: Offshore-Windenergiesysteme. Abschlußbericht zum BMBF-Fördervorhaben 0329645, Bremen 1995) werden für die Ermittlung der effektivsten Gründung für derartige Windenergiesysteme drei Fundamenttypen beschrieben:
- eine Monopfahlgründung, (dort bezeichnet als Brunnengründung), bestehend aus einem Stahlrohr oder einem Stahlbetonrohr mit oben anschließendem Stahlrohrturm; als Nachteile dieser technischen Lösung werden hoher Aufwand beim Transport und bei der Montage aufgrund der Länge und des Gewichtes des Betonrohres, ein hoher Absenkaufwand und ein schwieriger Rückbau hervorgehoben;
- eine Schwerkraftgründung (Flachgründung) in Form eines Schwimmsenkkastens mit einem rohrförmigen Turmteil ausgeführt als Stahlbetonkonstruktion oder Stahlkonstruktion; als Problem werden hier insbesondere der hohe Anteil an Unterwasserarbeiten und die damit verbundene Witterungsabhängigkeit, das Erfordernis der Schaffung einer Fertigungsanlage und der schwierige Rückbau gesehen und
- eine Schwerkraftgründung (Flachgründung), auf der eine Dreibein-Schwimmsenkkasten in Stahlkonstruktion befestigt wird, die jedoch einen hohen Herstellungsaufwand und ebenfalls Bodenvorbereitung am Standort bedingt.

Bei Tripoden wird ein zentraler Turm durch je drei stark und drei weitere schwach geneigte Stäbe aufrecht gehalten.
Diese werde wie andere verzweigte Strukturen im Regelfall separat mit drei einzelnen Fundamenten versehen, und mit Pfählen oder mit separaten Schwerkraftfundamenten gegründet, die die Enden des Tripods entweder durch ihr Gewicht oder durch Pfähle halten. Die Standsicherheit beruht insbesondere auf dem Abstand zwischen den drei Fundamenten und dem damit in horizontaler Richtung erreichten Hebelarm. seltener mit einer zusammenhängenden Flachgründung.
Als ein Beispiel hierfür beschreibt die DE 201 00 588 U1 eine Windkraftanlage, bei der ein Rohrturm im unteren Teil mit einem Stahlrahmen verbunden ist, der aus drei Beinen und die Beine verbindenden Beinverstrebungen und Traversen zwischen Pfeilerfuß und Bein besteht. An den Enden der Beine des Stahlrahmens sind Verankerungsvorrichtungen angeordnet. Somit erfolgt eine Verteilung der Kräfte auf mehrere Fußpunkte mit getrennter Krafteinleitung in den Boden.
Auch von den Initiatoren eines Offshore-Windprojekts in tiefem Wasser (Projekt Borkum-Riffgrund - Prokon Nord) wurde bekannt, dass eine Tripod-Lösung zum Einsatz kommt (Vortrag auf einem DEWI workshop zum Thema offshore-Windenergie im Juni 2000).
Soweit in diesen Tripod-Konzepten ein Wechsel von verzweigten zu unverzweigten Teilstrukturen stattfindet, erfolgt die Verzweigung meist nahe der Wasserlinie, wenn der obere Anteil unverzweigt ist.

Bei Offshore-Bauwerken der Öl- und Gasindustrie werden häufig verzweigte Konstruktionen mit meist mehreren relativ schlanken, fachwerkartigen Standbeinen bzw. Stützen je Plattform und mit mehreren Pfählen je Stütze kombiniert.
Diese weisen jedoch im Vergleich zu Windkraftanlagen deutlich größere Bauwerksgewichte auf, so dass schrägstehende Pfähle häufiger nur auf Druck belastet werden. Dagegen ist bei Windkraftanlagen das Verhältnis von windinduzierten Momenten zur Masse größer, so dass die Momentabtragung zur maßgeblichen Aufgabe wird.

Bei Überwiegen nur einer äußeren Kraft zusätzlich zum Eigengewicht, d.h. entweder der Windbelastung (typische Situation für Türme, Schornsteine, Windkraftanlagen an Land) oder der Wellenbelastung, ergeben sich in den verschiedenen Streben von Fachwerkkonstruktionen und zugehörigen separaten Zug/Druckpfählen relativ definierte Kraftverteilungen. Dabei kann die Gestalt des Fachwerks in Abhängigkeit von der Höhe typischerweise einwirkender horizontaler Kräfte und den daraus resultierenden Momenten so gewählt werden, dass sich günstige Kraftverläufe in den Stützen und vergleichsweise geringe Belastungen in den Verstrebungen ergeben. In der Praxis werden bei Windkraftanlagen mit Gittermasten häufig weit ausladende Konstruktionen errichtet.

Eine Optimierung der Fachwerkabmessungen wird bei Offshore-Windkraftwerken dadurch erschwert, dass Wind- und Wellenlasten stochastisch zusammenwirken und mit deutlich unterschiedlichen Hebelarmen (Ansatzpunkt der Windlasten des Rotors etwa in Nabenhöhe, Wellenlasten unterhalb der Wasseroberfläche), unterschiedlichen Frequenzen und Phasen auf das Bauwerk und indirekt auf den Baugrund einwirken. Denkbar ist daher, dass bestimmte Tragwerkselemente vorrangig die Windkräfte, andere vorrangig die Wellenlasten abführen würden, und entsprechend dimensioniert werden müssen. Außerdem würde bei mehreren weit ausladenden Fußpunkten die Wasseroberfläche eventuell an mehreren Stellen gekreuzt werden, und würden an mehreren Stellen Wellenkräfte auf die Struktur einwirken. Dagegen kann bei einem Rohrturm und bei der beschriebenen Tragkonstruktion dasselbe Tragelement abwechselnd beide Lasten abführen, wodurch sich zudem die Einflüsse von Wind und Welle bei unterschiedlicher Kraftrichtung zum Teil kompensieren.

Die Standsicherheit verzweigter Konstruktionen für Windkraftanlagen mit separaten Gründungen je Stütze kann unter anderem durch große Stützabstände (Hebelarm) verbessert werden. Dies würde jedoch bei Gründung im Wasser relativ aufwendige Verstrebungen zwischen den Stützen unterhalb der Wasserlinie erforderlich machen (vergleiche etwa OPTI-OWEC, a.a.O., volume 2, Seite 5-1 mit 50 m Abstand zwischen den Füßen). Typische Gittermasten großer Windkraftanlagen an Land erreichen Fußabstände über 20 Metern. Dabei handelt es sich bei Aufstellung im Meer um einen von Wellenlasten beeinflussten Bereich. Ein geringerer Abstand der Stützen würde dagegen durch den geringeren Hebelarm zwischen den Stützen den Aufwand zur Gründung der einzelnen Stützen erhöhen.

Fundamente, die vorwiegend durch die Wirkung des Gewichts der Gründung, die Schwerkraft und die Bettung auf der Unterseite im Boden (Sohlbettung) der Tragkonstruktion Stabilität verleihen, wobei durch entsprechende Gewichte und Abmessungen des Fundaments ein Umkippen verhindert wird. Solche als Schwerkraftfundamente bezeichneten Fundamente werden in Verbindung mit rohrförmigen Tragkonstruktionen für Offshore-Windkraftanlagen eingesetzt. Es ist bekannt, Schwerkraftfundamente mit einem einzigen Fundamentkörper oder aus mehreren an Fußpunkten der Tragkonstruktion angeordneten Einzelfundamenten auszubilden. Sie können in unzureichend tragfähigen Boden eingebettet sein und dabei indirekt über auf Druck belastete (Aufstands-)Pfähle auf tragfähigerem Boden ruhen (z.B. bestimmte Pfahl-Platte-Gründungen).

Flosdorff und Hilgarth beschreiben in Elektrische Energieverteilung, 6. Auflage S. 21 f., 1995 als Sonderfall ein "Einblockfundament" in Form eines zusammenhängenden Gründungskörpers (für Mastgründungen an Land), wie er vor allem für schaftförmige Maststiele verwendet wird und hier offensichtlich als Schwerkraftfundament mit "großer Betonmenge" gedacht ist bzw. in der Praxis für solche Anwendungen eingesetzt wird. Aus der Veröffentlichung geht auch hervor, dass mit dieser Bauweise an eine vorwiegend durch die Sohlbettung des Fundaments wirkende Kraftabtragung gedacht wurde.

Offshore-Windkraftanlagen stellen durch die in relativ großer Höhe über Meeresspiegel auf den Rotoren lastenden Windkräfte, die zusätzlichen Wellenkräfte und die vergleichsweise niedrigen Massen besonders hohe Anforderungen an die Gründung.
Schwerkraftfundamente erfordern daher ausreichend schwere Gründungskörper. Für sie werden insbesondere bei Einbau im Wasser Kostennachteile angegeben, außerdem haben sie Nachteile bezüglich Strömungswiderstand, Kolkung und Schiffssicherheit.
Die zur Erzielung eines Hebelarms erforderliche breite Spannweite oder Aufstandsfläche am Boden führt insbesondere dann zu erhöhtem Aufwand, wenn der weit ausladende untere Teil äußeren Einwirkungen durch Wellengang ausgesetzt ist, die regelmäßig mit den Abmessungen der Tragstruktur zunehmen.

Bekannt und in vorstehenden Quellen für Offshore-Windkraftanlagen beschrieben sind Pfahlgründungen, zunächst als Konstruktionen mit mehreren Pfählen, bei denen bei Einleitung von hinreichend großen Kippmomenten jeweils gegenüberliegende Pfähle gegensätzlich auf Zug- bzw. Druck in Richtung der Pfahlachsen belastet werden und die Pfähle somit ein Gegenmoment zu Lasten in der Tragstruktur erzeugen können.

Bei Pfahlgruppen werden äußere Pfähle oft nach außen geneigt eingebaut, um durch die Aufspreizung der Pfähle ungünstige Wechselwirkungen zwischen den Pfählen zu begrenzen. Dabei kann durch Zug- und Druckkräfte in den Pfählen ein Drehmoment eingelegt werden, wenn sich die Achsen gegensätzlich belasteter Pfähle oberhalb der Bettungsebene schneiden, wie es bei relativ geringer Pfahlneigung regelmäßig der Fall ist.

Pfahlgründungen erfordern wenigstens bei den auf Zug belasteten Pfählen eine hinreichende Kraftübertragung in axialer Richtung des Pfahls durch Mantelreibung und somit entsprechende Mantelflächen zur Kraftübertragung an den umgebenden Boden. Die übertragbaren Kräfte steigen jedoch im allgemeinen nicht schneller als proportional zur Mantelfläche des Pfahls. Die Erzeugung eines Hebelarms durch ausreichenden Abstand der Pfähle ist mit einem hohen konstruktiven Aufwand zur Schaffung einer breiten Tragstruktur am Boden verbunden.

Das Prinzip des Monopfahls beruht hingegen hauptsächlich auf einer seitlichen Bettung des Pfahls, der in hinreichende Tiefe eingetrieben wird, und sich im oberen bzw. unteren Teil der Eindringtiefe in gegensätzlicher Richtung seitlich im Boden abstützt.

Bei den bekannten bzw. beschriebenen Monopfahlgründungen wird der Pfahl nur teilweise in den Boden eingerammt und reicht bis über die Wasseroberfläche. Bei Windkraftanlagen erfolgte dies stets in Verbindung mit einem Rohrturm. Im Prinzip stellt dies eine Fortsetzung der oberen Rohrturm-Tragkonstruktion im Wasser und im Boden dar. Möglich ist dabei auch ein Wechsel des Rohrmaterials, der an der Bodenoberfläche oder im eigentlichen Turmbereich erfolgen kann, insbesondere mit einem Materialwechsel von Beton (unten) zu Stahl (oben) in Nähe der Wasseroberfläche.

Aus der DE 29 49 063 A1 ist eine im Wasser stehende Off-Shore-Plattform zu entnehmen, bei der ein in den Grund getriebener, vertikaler Stützpfahl durch mit diesem verbundenen Schrägpfählen abgestützt ist, wobei diese Schrägpfähle durch Öffnungen des Stützpfahles gesteckt sind.

Konventionelle Monopile-Tragstrukturen, bei denen sich eine Rohrform vom Fundament bis zum Mast fortsetzt, berücksichtigen nicht das Erfordernis der Begrenzung der Lastangriffsfläche. Sie sind dadurch begrenzt, dass einerseits zur Momentabtragung in den Boden ein hinreichender Durchmesser des Tragrohrs und Fundamentkörpers benötigt wird und andererseits mit zunehmendem Durchmesser des Turms die Wellenlasten zunehmen.

OPTI-OWECS a.a.O., Volume 4, Seite 3 bis 14 geht dabei davon aus, dass monopile-Lösungen für Windkraftanlagen bei Wassertiefen über 20 - 25 m nicht realisierbar sind. Jedenfalls ergeben sich dann beträchtliche Durchmesser und Wandstärken.

Unter Offshore-Bedinungen ist es vorteilhaft, die Tragkonstruktion bis über die Wasserlinie in einem Stück zu errichten, um Unterwasser-Schweißarbeiten zu vermeiden. Beim Rammen sehr langer Monopfähle (Gründungsanteil und in der Wassersäule bleibender Rohrabschnitt) besteht jedoch Beulgefahr, insbesondere die Gefahr des Zusammendrückens in Längsachse.

Bei Pfahlgruppen, die durch Zug- und Druckkräfte ohne Mitwirkung eines zentralen Monopfahls ein Moment erzeugen, würde eine flachere Ausführung der seitlichen Pfähle den Schnittpunkt der Wirkungslinien nach unten verschieben und damit den wirkenden Hebelarm beeinträchtigen, weswegen diese bislang regelmäßig mit größerer Neigung als 50° ausgeführt werden.

Aufgabe der Erfindung ist es daher, eine verbesserte meerestechnische Tragkonstruktion bereitzustellen, die bei Wahrung der Vorzüge kompakter Bauweise die Abtragung von Wind- und Wellenlasten gewährleistet.

Aufgabe der Erfindung ist es des weiteren ein Verfahren zur Herstellung und Errichtung derartiger Tragkonstruktionen zur Verfügung zu stellen.

Erfindungsgemäß wird die Aufgabe zur Bereitstellung der Tragkonstruktion, insbesondere für Offshore-Windkraftanlagen, durch eine meerestechnische Tragkonstruktion mit den Merkmalen des Anspruches 1 gelöst.

Vorteilhafte Ausgestaltungen der erfindungsgemäßen Tragkonstruktion ergeben sich aus den Merkmalen der Ansprüche 2 bis 19.

Die Aufgabe zur Bereitstellung eines Verfahrens zur Herstellung der meerestechnischen Tragkonstruktion wird durch die Merkmale des Anspruches 19 und in dessen vorteilhafter Ausgestaltung durch die Merkmale des Anspruches 20 gelöst.

Die Aufgabe zur Bereitstellung eines Verfahrens zur Errichtung der meerestechnischen Tragkonstruktion wird durch die Merkmale des Anspruches 21 gelöst.

Die Tragkonstruktion weist im Boden als Fundament einen auf Drehmoment um eine horizontale Achse belastbaren Gründungskörper (Monopfahl) mit einer grundsätzlich geschlossenen seitlichen Mantelfläche auf. Der Monopfahl ist erfindungsgemäß nach oben mit einem Fachwerk fortgesetzt, das den oberen Teil der Tragkonstruktion bildet.

Im Vergleich zu anderen verzweigten Tragstrukturen, etwa auf Land errichteten Windkraftanlagen mit Gittermasten, die üblicherweise getrennt gegründet werden, ergibt sich somit erfindungsgemäß eine vergleichsweise enge Bauweise durch den Bezug auf die Außenabmessungen bzw. den Durchmesser des Monopfahls am unteren Ende des Fachwerkes.

Der besondere Vorzug der Erfindung ergibt sich durch die Kombination der Vorteile eines einzelnen Großpfahls (Monopfahls) im Boden mit denen einer verzweigten Fachwerkkonstruktion. Dies ermöglicht die Verbindung einer geschlossenen Mantelfläche im Boden mit größerer Durchlässigkeit für die bewegten Medien und konzentrierter Lastabtragung. Diese Eigenschaften wirken sich insbesondere bei kombinierten Einwirkung von großen Wellen- und Windlasten mit hohen Hebelarmen positiv aus.

Innerhalb des Bodens kann der Monopfahl die eingeleiteten Bemessungsmomente über seine vergleichsweise große seitliche Mantelfläche an das umgebende Erdreich übertragen, indem er sich in unterschiedlicher Höhe auf entgegengesetzten Seiten gegen das umgebende Erdreich abstützt. Im oberen Teil stützt sich der Monopfahl über die Abtragung der eingeleiteten horizontalen Kraft hinaus in Richtung der weiter oben eingeleiteten Kippmomente ab, wodurch im unteren Teil des Monopfahls eine Gegenkraft gegen das Erdreich auf der anderen Seite des Monopfahls entsteht. Damit werden die eingeleiteten Momente durch geringfügiges Verkippen des Fundaments mittels ungefähr horizontaler, beidseitiger Kräfte in das Erdreich eingeleitet. Dieser Übertragungsweg dominiert gegenüber der ebenfalls wirksamen Abtragung von Kräften über die Mantelreibung (insbesondere Kräfte parallel zur Mantelfläche in vertikaler Richtung), den Spitzendruck und die außermittige Sohlbettung.
Die Krafteinleitung erfolgt also im Gegensatz zur Mantelreibung nicht parallel zur Pfahloberfläche, sondern senkrecht oder in einem Winkel zur Pfahloberfläche. Somit wird im Vergleich zu Zug- und Druckpfählen mit Krafteinleitung parallel zur Pfahloberfläche eine bessere Kraftübertragung erreicht, die zudem unabhängiger von der Oberflächenstruktur des Pfahls, verwendeten Oberflächenbehandlungen (Korrosionsschutz), Rammhilfsmitteln (Gleitunterstützung) und bestimmten Bodenkennwerten ist.

Oberhalb des Meeresbodens ergibt sich an der Fachwerk-Tragkonstruktion gegenüber den für Offshore-Windkraftanlagen bekannten Einrohrtürmen vergleichbarer Gesamtabmessungen ein geringerer Strömungswiderstand und damit eine deutlich geminderte Krafteinwirkung durch Wellengang bei Errichtung im Wasser. Diese Lastreduzierung kann wiederum zur Verminderung der Dimensionen und Materialstärken genutzt werden und vor allem bei größeren Wassertiefen die Machbarkeit einer Monopfahl-Gründung verbessern.

Eine Optimierung der Abmessungen könnte dennoch größere Monopfahldurchmesser als bei Tragstrukturen mit rohrförmiger Fortsetzung des Monopfahls über dem Meeresboden, weil weniger den Durchmesser beschränkende Einschränkungen durch den Wellengang entstehen, während große Durchmesser bei einer Monopile-Rohrturm-Bauweise mit kontinuierlichem Pfahldurchmesser in Boden und Wassersäule zu erheblich ungünstigeren Einwirkungen des Wellengangs führen würden. Dies kann insbesondere bei durch die Bodenschichtung beschränkten Rammtiefen bzw. schlechter Tragfähigkeit des Bodens zur Verbesserung der Krafteinleitung im Boden vorteilhaft sein. Besonders große Pfähle dienen auch der Erzielung eines größeren Hebelarms der Stützen, sofern diese am Pfahlumfang angeordnet werden.

Durch die großen Abmessungen des Monopfahls ergibt sich auch mit vertretbaren Wand- oder Bewehrungsstärken eine große Biegefestigkeit des Fundaments; die diese Krafteinleitung unterstützt, insbesondere im Vergleich mit mehreren Einzelpfählen mit geringeren Abmessungen. Auch die seitliche Bettung wird durch große Abmessungen begünstigt.

Je nach Art und Abmessungen des Monopfahles, der Stützen und der Einbautechnik ergeben sich unterschiedliche Befestigungsweisen des Fachwerkes am Monopfahl, die in bevorzugten Ausführungsformen der Erfindung ihren Niederschlag finden.

Eine der Ausführungsformen kann insbesondere dadurch erfolgen, dass das Fundament aus einem großen, aufrecht stehenden, im Boden eingebauten Stahlrohr besteht, an das die Stützen unmittelbar angeschweißt sind, die aus kleineren, ebenfalls aufrecht stehenden Stahlrohren bestehen. Die Stützen könnten in einer zweckmäßigen Ausprägung vor dem Anschweißen geschlitzt, auf dem Umfang des Monopfahles aufgesteckt und mit je vier Schweißnähten befestigt werden. Die beiden Seiten der Stützrohre können im geschlitzten, unteren Bereich zu dem großen Rohr hin gebogen sein. Dabei können sich die Rohrsegmente durch zunehmende Aufweitung nach unten hin dem großen Rohr anschmiegen oder bei entsprechender Formgebung entlang einer halbellipsenförmigen Schweißlinie dem großen Rohr annähern.

Ebenfalls möglich ist ein "Einschlitzen" des Monopfahles. Möglich ist auch eine allmähliche Umformung von Segmenten des Monopfahles im vertikalen Verlauf, bis diese dem kleineren Radius der die Stützen bildenden Rohre entsprechen.

Im Falle eines Stahlbetonpfahls können die Stützen einige Zentimeter innerhalb der Mantelfläche in diesen eindringen und im Pfahlinneren mit der in diesem vorhandenen Bewehrung verbunden sein bzw. einen Teil von dessen Bewehrung bilden. Im Falle von Stahlstützen können diese so ausgeführt werden, dass sie sich innerhalb des Betonfundaments nach unten hin verzweigen und auffächern.

In vorstehenden Fällen wird eine Unterbrechung der Wirkungslinie des Kraftflusses bzw. werden stärkere Versprünge in der Höhe des Übergangs vom Monopfahl zur Fachwerkkonstruktion vermieden. Diese wäre in der Ebene des Meeresbodens als einer stark auf Biegung beanspruchten Stelle nicht erwünscht.

Durch die im Vergleich zu anderen Fachwerkstrukturen relativ kompakte Bauweise - in der Regel dürfte bei sinnvoller Auslegung der Abstand der Stützen das Doppelte des Pfahldurchmessers nicht übersteigen - wird erreicht, dass sich Wind- und Wellenlasten in ähnlicher Weise und in die dieselben Teile der Tragkonstruktion übertragen. Teilweise werden die Kräfte aus Wind und Wellen sich wegen unterschiedlicher Richtung kompensieren, teilweise zu unterschiedlichen Zeitpunkten auftreten, so dass Doppelauslegungen für Wind *und* Welle an unterschiedlichen Stellen vermieden werden können. Entsprechend den kurzen Abständen zwischen den Stützen sind auch die Abstände zwischen aussteifenden Verstrebungen relativ kurz. Durch die kurze Abfolge der Verstrebungen ist auch die Gefahr des Einknickens der Stäbe zwischen zwei Verstrebungen in Folge seitlicher Wellenkräfte reduziert, die Stäbe können daher einen geringeren Durchmesser bzw. weniger Aussteifungen erhalten als bei weiter ausladenden Fachwerk bzw. Jacketkonstruktionen.

Die kleineren Durchmesser der einzelnen Stützen und die gegenüber unverzweigten Rohrtürmen tendenziell stärkeren Wandstärken der Stützen im Fachwerk können auch das Verhalten der Windkraftanlage bei äußeren mechanischen Einwirkungen positiv beeinflussen, beispielsweise bei einem Schiffsstoß. Gleichzeitig ist bei einem starken Schiffsstoß in der Regel ein Umknicken am unteren Ende des Fachwerks zu erwarten, wo sich somit eine erwünschte "Sollbruchstelle" ergibt, die ein stärkeres Aufschlitzen der Schiffshaut vermeidet. Dies gilt besonders bei einer Verjüngung des Stützenabstands bei der Zusammenführung zum Monopfahl. Außerdem können reduzierte Oberflächen und größere Wandstärken ein besseres Korrosionsverhalten ergeben.

Sofern der Monopfahl mit Fachwerk gegenüber einer Monopfahl-Rohrturmauslegung einen größeren Durchmesser des Pfahls aufweist, kann die daraus resultierende Steifheit evtl. die Wahl einer geringeren Wandstärke im Pfahl und damit eine Begrenzung des Materialaufwands für den Monopfahl ermöglichen.

Die erfindungsgemäße Lösung bietet die Möglichkeit, die Abmessungen des Monopfahles und die Abstände der Stützen so zu wählen, dass die Stützen des Fachwerkes als Führung oder Bewegungsraum für eine Rammeinrichtung diesen könnten, besonders bei vertikaler Einmündung der Stützen in den Monopfahl. Sie könnten in ihrer rohrförmigen Ausführung ebenfalls zur Zufuhr von Energie oder Wasser oder zur Abfuhr von Spülgut während eines Bohrvorgangs genutzt werden. Der evtl. verstärkte Übergangsbereich zwischen Stützen und Monopfahl könnte ähnlich einem Amboss das Einrammen in den Boden unterstützen.

Da das Fachwerk vielfach nicht zur Übertragung von Rammstößen geeignet sein wird, könnte entweder direkt auf den Pfahl gehämmert werden - hierzu wäre evtl. ein rohrförmiger, unten gegen das Eindringen von Wasser geschlossener Aufsatz von Vorteil, um die Rammeinrichtung in Luft bewegen zu können - oder ein rohrförmigen Aufsatz mit ähnlichen Abmessungen wie der Pfahl könnte als Meißel die Kraft von einer Rammeinrichtung über dem Wasser nach unten übertragen.

Ein Fachwerkturm ist in Folge der schwächeren Wechselwirkung mit dem Wasser grundsätzlich schlechter als ein einfacher Rohrturm in der Lage, aerodynamisch verursachte Schwingungen des Turmes auf das Wasser zu übertragen.
Um die Dämpfungseigenschaften wieder zu verbessern, sind nach einer besonderen Ausführungsform der Erfindung ein oder mehrere Körper als Strömungshindemis im Wasser platziert und mit geeigneten Mitteln, vorzugsweise beweglichen Stäben oder Seilen, mit dem Fachwerk bzw. dem oberen Teil des Monopfahles und gegebenenfalls einer Verankerung im Boden verbunden. Die Stäbe oder Seile können auch selbst die abbremsenden Körper darstellen.
Dabei kann die Tatsache genutzt werden, dass die vom Wind oder von den bewegten Rotoren ausgelösten Lasten meist eine höhere Frequenz aufweisen als die für die Bemessung der Wellenlasten maßgeblichen, langen Dünungswellen. Günstig erscheinen insbesondere "Rippen", bzw. flächige, kleinvolumige Körper, die im Verhältnis zu ihrem Volumen einen großen Strömungswiderstand aufweisen.
Während flächige Körper Bewegungen abbremsen, verursachen volumige Körper im Wasser, auch bei gleicher Dichte wie das Wasser, Kräfte proportional zu ihrer Beschleunigung und wirken damit evtl. in stärkerem Maße Beschleunigungen des Seilsystems und des Turms entgegen.
Zweckmäßig erscheint eine Anbringung von Dämpfungskörpern vorrangig im mittleren Teil der Wassersäule zwischen Meeresboden und Wasseroberfläche, damit einerseits die Wellen von der Wasseroberfläche weniger stark angreifen, andererseits eine größere Bewegungsamplitude zur Verfügung steht als an den tiefsten Stellen unweit des unteren Befestigungspunktes.
Durch Anbringung des Körpers an einer Stelle der Tragstruktur, die starken Bewegungen durch die zu dämpfenden Schwingungen ausgesetzt ist, kann erreicht werden, dass dieser starke Bewegungen im Wasser ausführt und somit die Dämpfung groß ist. Dies kann insbesondere durch ein geeignete Seilführung erreicht werden.
Die Dämpfungskörper können evtl. drehbar so gelagert werden, dass sie langsameren Bewegungen des Wassers durch Wellengang stärker ausweichen als Bewegungen durch die Tragkonstruktion mit höherer Frequenz.

Bevorzugte Ausführungsformen der erfindungsgemäßen tragkonstruktionen sehen Seilabspannungen vor.
Eine Seilabspannung kann zunächst auf gerader Linie, bzw. entsprechend der sich einstellenden Keffenlinie, von dem Turm zum Meeresboden geführt und dort verankert werden. Bei einer Seilabspannung verschiebt sich der Momentenverlauf im Turm, und die größte Momentlast im Turm entsteht bei Abspannung in nur einer Höhe regelmäßig bei der Einmündung der Seile. Da ein Fachwerk grundsätzlich besonders zur Aufnahme von Momentlasten geeignet ist, durch die Seilabspannung die Übergangsstelle vom Fachwerk zum Monopfahl von Kippmomenten entlastet wird, und an den Stützen des Fachwerks jeweils eine gute Anknüpfungsmöglichkeiten für ein Abspannseil besteht, ergibt sich ein vorteilhaftes Zusammenwirken von Fachwerk, Monopfahl und Seilabspannung. Andererseits gewährleistet die feste Verbindung zwischen Monopfahl und Fachwerkturm eine gewisse Standfestigkeit auch ohne die Seilwirkung.

Zur Dämpfung der Schwingungen und für verbesserte Eigenschaften der Tragkonstruktion kann eine Verbindung der Halteseile untereinander durch Verbindungsseile erfolgen. Diese Bauweise führt bei Biegung des Turms in eine Richtung und damit Spannen der Halteseile auf der entgegengesetzten Seite zur Ausübung eines Zug auf die Verbindungsseile, der ein völliges Erschlaffen der entlasteten Halteseile und damit einen Ruck bei Wiederanspannung vermeidet.

Eine weitere bevorzugte Ausführungsform sieht vor, dass die Seilabspannung aus drei am Fachwerk angeordneten, schräg zum Meeresboden verlaufenden und in diesem verankerten Halteseilen besteht, die in der im wesentlichen horizontalen Ebene durch ein annähernd gleichseitiges Dreieck bildende Verbindungsseile miteinander verbunden sind, die somit im mittleren Teil der Halteseile angreifen, und dadurch einen geknickten Verlauf der Halteseile verursachen. Dieses Dreieck könnte auch etwas kleiner gestaltet werden, und um zwischen den Ecken des Dreiecks und den äußeren Spannseilen angeordnete Verbindungsstücke ergänzt werden.

Weitere Ausführungsformen der Seilabspannung sehen weitere Spannseile vor, die unten bevorzugt am Fuß des Turms bzw. am oberen Ende des Monopfahls befestigt sind. An ihrem oberen Ende mit einem Dreieck von Verbindungsseilen gemäß vorstehender Beschreibung verbunden. Dies kann entweder an den Ecken des Dreiecks in Verbindung mit den benannten Verbindungsstücken geschehen, oder die Spannseile greifen an den Seiten des Dreiecks an und verformen dieses damit zu einem im Raum geknickten Gebilde mit sechs Ecken. Statt Halteseilen in drei Richtungen können, bevorzugt entsprechend der Stützenzahl, auch Seilsysteme mit mehreren Halterichtungen aufgebaut werden, oder weitere Varianaten der Seilführung abgeleitet werden.

Die Halteseile sind also untereinander mit weniger stark gespannten Seilen (Verbindungsseilen) verbunden, was direkt mit horizontalen Seilen oder indirekt mit zusätzlich an der Tragstruktur verbundenen Spanneilen erfolgen kann. Dadurch wird erreicht, dass eine Biegung des Turmes in eine Richtung zu einer Entspannung des Halteseils in Bewegungsrichtung führt.

Daraufhin bewegen sich die Verbindungsseile (ungefähr) entgegengesetzt zu der Turmbewegung, verbunden mit einer verstärkten Knickung des Halteseils. Auf der gegenüberliegenden Seite ermöglicht dieses Nachgeben des Verbindungsseils eine Verschiebung des dortigen Halteseils in Richtung größerer Geradlinigkeit, ohne dass es hierfür ursächlich einer Streckung des Verbindungsseils bedarf.

In vertikaler Ausgangsstellung wird die von den Seilen erzeugte (marginale) Federkonstante (nahezu) gegen Null gehen, weil bei (nahezu) gleichem Knickwinkel der Halteseile in der Ausgangslage die (marginale) Zunahme der Knickung auf der Seite in Kraftrichtung eine Ausgleichsbewegung der Verbindungsseile verursacht, die eine Abnahme der Knickung des bzw. der entgegengesetzten Halteseile im gleichen Maße ermöglicht, ohne dass sich dabei die Zugspannungen in den Halteseilen bzw. die Länge dieser Halteseile ändern bzw. unterschiedlich stark vergrößern.

Durch diese Führung der Spannseile kommt es also zu einer Nachgiebigkeit der Seilverspannung bei mäßig starken seitlichen Bewegungen des Turmes, weil diese anfangs per saldo geringe aufrichtende Kräfte in den Seilen verursachen.

Dadurch wird erreicht, dass der Turm, bevor die Halteseile ein stärkeres Saldo der seitlichen Seilkräfte verursachen, eine größere Schrägstellung erreicht, als wenn geradlinig geführte Seile sofort mit der Straffheit ihrer Federkonstante bzw. mit einer zusätzlich durch den Durchhang beeinflussten Kraft am Turm angreifen würden.

Mit zunehmender seitlicher Auslenkung des Turms weisen die einander entgegengesetzten Halteseile einen immer unterschiedlicheren Knickwinkel auf. Dies führt bei gleicher Zugkraft an den entgegengesetzten Enden der Verbindungsseile dazu, dass eine unterschiedliche Seilspannung in den Halteseilen entsteht, so dass ein Kräftesaldo entsteht, der einer weiteren seitlichen Verschiebung des Haltepunkts am Turm entgegenwirkt.

Bei vollständiger Streckung des der Bewegungsrichtung abgewandten Halteseils geht das Verhältnis der Kräfte im Halteseil gegenüber dem Verbindungsseil gegen Unendlich. Dieser Zustand wird nur bei Erschlaffung der anderen Seile (nahezu) erreicht, so dass dann nur noch dieses Halteseil die Federkonstante des Seilsystems bestimmen würde.

Durch die geringe Anfangssteifheit des Seilsystems kommt es erst nach einer gewissen Verschiebung des Turms in Höhe des Seilangriffspunkts zum Aufbau von stärker stabilisierenden Kräften am Seil. Allmählich zunehmende, auf den Turm einwirkende Kräfte werden daher anfangs hauptsächlich in das Fundament übertragen, und erst anschließend (auch) auf das Seil. Der Turm kann damit größere Kraft- und Momentanteile in die Gründung übertragen, und die stärkere Bewegung kann zur Dämpfung beitragen. Zugleich ergibt sich eine "welche" Reaktion des Tragwerks auf einwirkende Momente mäßiger Stärke, die die an anderer Stelle der Tragkonstruktion entstehenden Kräfte reduzieren kann.

Durch die Geometrie der Seilführung kann eine Anpassung der effektiven Federkonstante der Seilstruktur an die Steifheit von Turm und Gründung erreicht werden, auch wenn durch die maximale Lastaufnahme ein bestimmter Querschnitt des Seils vorgegeben ist.

Das Fundament des Turms, das bei Offshore-Windkraftanlagen zur Übertragung von (Dreh-) Momenten um eine vertikale Achse ohnehin eine beträchtliche Größe besitzen muss, wird somit an der Momenteinleitung beteiligt. Insbesondere ist eine Biegung und Schrägstellung des gesamten Turms in Richtung der (z.B. durch Windkräfte im Rotor) eingeleiteten Kraft möglich. Die entsprechende Schrägstellung im Bereich des Monopfahles drückt diesen vorrangig in tieferen, belastbareren Bodenschichten zur gegenüberliegenden Seite und bewirkt damit eine günstige Krafteinleitung und ein günstiges Momentengleichgewicht.

Bei unterhalb des Befestigungspunkts der Seile angreifenden (Wellen-) Lasten ergibt sich einer günstigere Mitwirkung der Massenträgheit der Windkraftgondel und der atmosphärischen Dämpfung des Rotors, die die Belastung der Halteseile reduziert, als bei geradliniger seitlicher Befestigung.

Die mit dem Nachgeben der Seile verbundene weichere Reaktion der Tragstruktur, gekennzeichnet durch eine größere Auslenkung der Gondel bei Krafteinwirkungen, kann z.T. dort entstehende Lasten mindern.

Da sich bei dieser Art der Seilkonstruktion kein lineares System mit gleichbleibender Federkonstante ergibt, sind mögliche Schwingungen auch nicht auf feste Eigenfrequenzen beschränkt. Gefährliche Schwingungsanregungen können jedoch durch die Nichtlininerarität des Systems, die Dämpfung der Seile im Wasser und durch evtl. dort befestigte Körper vermieden werden. Es ist von (direkt) seilverspannten Lösungen allgemein bekannt, daß sich durch den Durchhang der Seile eine vorteilhaft wirkende Nichtlinearität der Bauwerksreaktion einstellt. Daher ist eine ähnliche Wirkung auch für die beschriebene, zusätzliche Ursache von Nichtlinearitäten zu erwarten.

Durch eine Geometrie mit relativ geringer Knickung der Halteseile, evtl. unterstützt durch eine mehrfache Beschleunigung durch mehrfach aufeinander folgenden seitlichen Angriff von leicht geknickten Seilen, kann eine schnellere Bewegung der Verbindungsseile und der Halteseile (idealtypisch quer zu deren Längsausdehnung) erreicht werden. Diese Bewegung kann zur Dämpfung der Turmbewegung im Wasser genutzt werden und in die entsprechenden Standfestigkeitsnachweise eingehen. Dies kann - wie bereits dargestellt - durch zusätzliche Anbringung von Körpern, die einen Strömungswiderstrand erzeugen und sich dazu in gewünschter Weise im Wasser drehen können, unterstützt werden.

Mit an den Verbindungsseilen befestigten Gewichten bzw. Auftriebskörpern kann des weiteren eine Vorspannung der Verbindungsseile eingestellt werden, die auch bei etwaigem Nachgeben der Pfahl-Verankerungen der Halteseile weitgehend aufrechterhalten bleibt und zudem leicht nachträglich ergänzt werden kann.

Durch seitliches Halten der Tragkonstruktion mittels Seilen während der Bauzeit kann evtl. der Einsatz von weiteren Hubeinrichtungen reduziert werden. In vorteilhafter Ausprägung könnte die Tragkonstruktion mit zusätzlicher Hilfe von Auftrieb schaffenden Einrichtungen aufgerichtet werden; von den Seilen gehalten werden und eine Rammeinrichtung könnte von dem Turm der Tragkonstruktion selbst gehalten werden.

Ein Vorzug der Seilabspannung besteht auch darin, dass beim Aufprall eines Schiffs auf eines der Halteseile auch die entgegengesetzten Halteseile gespannt werden. Dies kann das Risiko vermindern, dass der Turm zu dem Schiff hin gezogen wird. Beim Reißen eines dem Schiff entgegengesetzten Halteseils wird auch das Halteseil auf Seite des Schiffes im Bereich der Befestigung des Verbindungsseils entspannt; dadurch kann es evtl. zu einem Umfallen des Turms in Richtung des gerissenen Seils und vom Schiff weg kommen.

Nach einer weiteren bevorzugten Ausführungsform sind die als Stahlprofile oder Stahlrohre ausgeführten Stützen exzentrisch zueinander angeordnet.
Dabei könnte insbesondere eine Stütze als vergleichsweise großes Stahlrohr ausgeführt werden, und damit besonders geeignet sein, Momentlasten um eine vertikale Achse zu übertragen. Weiterhin ergibt sich bei runder Form ein günstiger, etwa exzentrisch konischer Anschluss an den Monopfahl. Dieses Stützrohr könnte gegebenenfalls auch in einem oberen Teil des Turms, wo kein Fachwerk mehr vorgesehen ist, fortgesetzt sein. Die übrigen Stützen würden dann vorrangig vertikale Lasten abtragen, so dass für sie dann ein kleinerer Durchmesser ausreichend sein könnte, bevorzugt mit größerer Wandstärke bzw. als Vollstab bei insgesamt vergleichbarem Stahlquerschnitt je Stütze, wobei sich der kleinere Durchmesser der übrigen Stützen vorteilhaft auf die Wellenlasten auswirkt.
Als exemplarische Größenordnungen könnte z.B. eine Stütze aus einem Stahlrohr mit 2 m Durchmesser und 25 mm Wandstärke bestehen, zwei weitere Stützen aus Stahlstäben mit 450 mm Durchmesser, verstrebt durch Rohre mit ebenfalls 450 mm Durchmesser bei einem Stützenabstand von 6 m und einem Pfahldurchmesser von 4,5 m.

Weitere bevorzugte Ausführungsformen der Erfindung sehen vor, dass die Stützen drei vertikal angeordnete, vorzugsweise durch schräge Verstrebungen miteinander verbundene Stahlprofile oder Stahlrohre sind, wobei die Abmessungen des Monopfahls und die Abmessungen der Stützen zueinander so gewählt sind, dass der Abstand von zwei Stützen an deren unteren Ende zwischen dem Vierfachen und dem Doppelten von cos 30° multipliziert mit dem Radius des Monopfahles liegt.
Wenn der Achsabstand dreier Stützen jeweils dem Produkt cos 30° (0,866) mal dem Durchmesser des Monopfahles entspricht, liegen die Achsen der drei Stützen auf dem Umkreis des Monopfahles, d.h. der Achsabstand der drei Stützen von ihrem gemeinsamen Mittelpunkt entspricht dem Radius des Monopfahls. Die Stützen sind also wie am Rand des Monopfahls aufgesteckt. Die Abmessungen des Fachwerkes ergeben sich demnach wenigstens im unteren Teil aus den äußeren Abmessungen des Monopfahls.
Bei doppelt so großen Abständen parallel angeordneter Stützen berührt die Ebene durch die Achsen je zweier Stützen gerade den Umfang des Monopfahls. Werden nun je zwei Stützen in dieser Ebene durch zwei Stäbe mit dem Monopfahl verbunden, treffen diese tangential auf die Wand des Monopfahls, also mit einer Kraftrichtung, die ein Einbeulen des Monopfahls möglichst verhindert.

Rohre mit unterschiedlichen Durchmessern werden im Stahlbau häufig so verbunden, dass ein Rohr seitlich in den Mantel des anderen einmündet.
Für die Verbindung rohrförmiger Stützen mit einem rohrförmigen Monopfahl-Fundament größeren Durchmessers wäre es möglich, zunächst eine Stütze konusförmig mit dem Fundament zu verbinden, und dann die anderen Stützen an diesen Konus anzuschweißen, evtl. mit ebenfalls konusförmigen Übergangsstücken. Dies würde jedoch eine ungleichmäßige Kraftverteilung ergeben.
Vorteilhafterweise wird jeweils eine Stütze, die vorzugsweise ein Rohr mit kleinerem Durchmesser darstellt, durch einen teilweise ausgeführten Konus mit dem Monopfahl - bzw. allgemeiner mit einem größeren Rohr - verbunden. Der Konus ist auf der oberen Seite bzw. auf der zur Stütze hin gerichteten Seite, vollständig, während er auf der anderen Seite unvollständig bleibt.
Eine einfache Lösung im Falle dreier Stützen wäre die Ausführung von drei teilweisen, exzentrischen Konen, die jeweils bei einer Stütze mit kreisförmigem Querschnitt beginnen und sich zum Monopfahl hin aufweiten, dort aber auf ein Segment von 120° des Monopfahl beschränkt wären. Möglich wäre dann eine Verschweißung an den drei Schnittlinien am Rand der drei Segmente.
Die Krafteinleitung soll erfindungsgemäß dadurch verbessert werden, dass jeder Konus in einer Richtung über die gedachte Schnittlinie hinaus fortgesetzt ist, und damit einen deutlich größeren Sektor des großen Rohrs erreicht. Bei gleichförmiger Anordnung der Rohre ergeben sich gleiche Teil-Konusse, die bei drei bzw. vier kleineren Rohren deutlich über die Hälfte des großen Rohrs umfassen können. Jeder dieser Teil-Konusse erreicht dadurch bereits eine vergrößerte Eigensteifigkeit.
Zusätzlich kann damit erreicht werden, dass an jeder Stelle des Umfangs des Monopfahls mindestens zwei Teil-Konusse mit unterschiedlicher Neigung einmünden. Damit ergibt sich die Möglichkeit eines Zusammenwirkens der Kräfte aus zwei Konussen mit den Kräften in dem Mantel des Monopfahls in einem Kräfte-Parallelogramm. Axiale bzw. die Rohrwand auf Biegung belastende Kräfte, wie sie bei einer unter einem Winkel geführten Verbindung zwischen einem Konus und einem Rohr auftreten würden, können damit vermieden bzw. gemindert werden. Um diese Wirkung zu verbessern, könnten die Konusse evtl. zuerst miteinander, dann erst mit dem großen Rohr verschweißt werden.
In der Praxis wird es vorteilhaft sein, die Teil-Konusse in der Mitte nicht spitz anzuschneiden, sondern eine abgerundete Schnittlinie auszuführen, und etwas Abstand von dem Überschneidungspunkt aller Voll-Konusse zu lassen. Ebenfalls kann an der Randlinie der Konusse zum großen Rohr hin ein spitzes Anschneiden von Vorteil sein, um ein allmähliches Auslaufen der Kräfte zu bewirken, bzw. ein vorteilhaftes Zusammenwirken der Kräfte mehrerer einmündender Konusse.
Es bietet sich auch an, die Konusse an ihrem seitlichen Rand, d.h. an der Schnittlinie zu dem benachbarten Konus, nicht miteinander zu verschweißen, um zu gewährleisten, dass alle Kräfte zwischen der jeweiligen Stütze und dem Monopfahl nur in dem zugehörigen Konus übertragen werden, und nicht andere Konusse quer zur ihrer Mantelfläche belastet werden. Die dadurch zwischen den Konussen entstehende Lücke könnte aber evt. elastisch verbunden werden, um das Eindringen unerwünschter Fremdstoffe wie Schlamm zu vermeiden.
Bei drei Konussen würde sich bei maximaler Ausführung der Teilkonusse mit je 5/6 des Umfangs auf drei Sechsteln des Umfangs des Monopfahls ein Einmünden dreier Konusse ergeben. Bei schweißtechnischen Nachteilen bei der Befestigung dreier Teilkonusse an einer Stelle könnte dies evtl. zu Gunsten von drei Teilkonussen mit jeweils 240°-Bögen am unteren Ende reduziert werden.
Sollten an der Pfahlseite der Konusse Flansche angeordnet werden, wäre es in der Regel nicht möglich, diese Konusse nacheinander an den Monopfahl anzuschrauben. Die Flansche wären daher gegebenenfalls stufenweise so auszuführen, dass die Flansche der Konusse übereinander liegen, und mit durchgehenden Schrauben mit dem Monopfahl verbunden werden, wobei der Flansch eines Konusses in Betrachtungsrichtung erst die oberste, dann die mittlere und im letzten Sektor die unterste Position der Flansche einnehmen würde.
Zum Zusammenfügen der Konusse ist gegebenenfalls ein gleichzeitiges Ansetzen aller drei Konusse an den ausgesparten Stellen und deren Zusammenschieben unter gleichzeitiger Drehung erforderlich. Bei einer größeren Zahl von Stützen und je nach Dimension der Konusse und der Aussparungen kann das Zusammenfügen evtl. gar nicht mehr gelingen, so dass sich praktische Anwendungen wohl vor allem für zwei bis vier Stützen ergeben.
Theoretisch, d.h. ohne Beachtung der Dicke der Konusse und der daraus resultierenden Breite der Schnittlinie zweier Konusse, und ohne Beachtung der Steifigkeit der Konusse während der Montage, könnten bei vier Stützen die vier Konusse auf der Pfahlseite jeweils zu 3/4 ausgeführt werden, so dass der Monopfahl überall mit drei einmündenden Konussen belegt wäre.
Bei drei Teil-Konussen könnte jeder zu knapp 5/6 des Umfangs am Monopfahl anstehen: Auf je einem Drittel der gedanklichen Drehrichtung um den Monopfahl liegt der Konus in obersten bzw. unterster Position der drei Vollkonusse. Dazwischen liegen zwei Abschnitte mit je einem Sechstel des Umfangs (60°), in denen der Konus die Mittellage einnimmt. Davon soll erfindungsgemäß nur ein Abschnitt realisiert werden, so dass der Konus im übrigen Sechstel des Umfangs unterbrochen ist.
Bei nur zwei Rohren könnten theoretisch zwei nahezu volle Konusse zusammengefügt werden könnten, die halb die obere, halb die untere Position einnehmen, und nur durch je einen Schlitz unterbrochen wären.
Zur Verbesserung der Rammfähigkeit entlang der Stützen in Richtung Monopfahl kann es vorteilhaft sein, die Konusse abschnittsweise so zu formen, dass sich von der Außenseite jeder Stütze eine nahezu senkrechte bzw. achsenparallele Verbindung von der Stütze zum Monopfahl ergibt, und diesen Bereich zu verstärken.
Das Prinzip ist auf andere Situationen übertragbar, in denen mehrere Rohre verbunden werden müssen, insbesondere in dem Fall eines oben an das Fachwerk anschließenden, rohrförmigen Turmabschnitts. Bei Konussen an beiden Enden der Stäbe sind sie gegebenenfalls alle gleichzeitig einzufädeln, was die Freiheiten bei der Wahl der Drehrichtungen der Konen reduziert.
Es ist nicht zwingend erforderlich, dass das hier durch den Monopfahl repräsentierte Rohr, in das die anderen Rohre (Stützen) einmünden, tatsächlich größere Abmessungen hat, bzw. dass alle Verbindungen konisch sind. Insbesondere können in entsprechender Weise auch zwei Rohre gleichen Durchmessers in Verbindung mit weiteren, kleineren verbunden werden, bzw. prinzipiell auch Rohre mit entgegengesetzten Größenverhältnissen. Bei Verbindung mehrerer Rohre mit gleichen Durchmessern würden die Konen zu dem Sonderfall des Zylinders bzw. elliptischen Zylinders. Neben runden Rohren kommen auch ovale oder eckige in Frage, die auch im Winkel zueinander eingebaut werden können.
Die Konen können evtl. vorteilhaft in einer Höhe angeordnet werden, in der sie zugleich als Eiskonen zum Brechen von Eisbedeckung auf dem Wasser wirksam werden.
Für einen Teil der Stützen kann eine besonders ausgeprägte Verbindung zu dem Monopfahl, etwa zur bevorzugten Übertragung vom Drehmomenten, durch eine ungleichmäßige Gestalt der Konen erreicht werden. Eine stärkere Ausprägung des jeweiligen Konus, d.h. eine geringere Aussparung, ergibt sich insbesondere
- durch einen größeren Durchmesser der betreffenden Stütze;
- durch einen größeren Abstand der betreffenden Stütze vom Monopfahl und dadurch eine steilere Gestalt des Konus, durch die der ausgeprägtere Konus in stärkerem Maße die anderen Konen überragt, und dadurch auch näher an dem benachbarten, in Betrachtungsrichtung vorigen Rohr, beginnt;
- durch einen größeren Abstand zu dem in Drehrichtung vorderen Konus, also mit einer ungleichmäßigen Anordnung der Stützen gegenüber der Achse des Monopfahls.

Eine weitere mögliche Ausführungsform bezieht sich darauf, im oberen Drittel des Monopfahles, vorzugsweise mit weniger als 50° Neigung, mindestens eine schräg zur Seite verlaufende Stütze anzuordnen.
Der Monopfahl kann ein Moment in den Boden übertragen, indem er sich im oberen Teil in die eine Richtung gegen den Boden drückt, und im unteren Teil gegen die andere. Im oberen Teil des Bodens sind jedoch bei vergleichbar weiter seitlicher Bettung nur kleinere Kräfte zu übertragen als weiter unten. Eine zusätzliche seitliche Abstützung kann daher dazu beitragen, die im oberen Teil des Monopfahles auftretenden horizontalen Kräfte wirksamer abzutragen, und damit eine geringere Dimensionierung des zentralen Pfahls zu ermöglichen.
Im Fall von einander gegenüber angeordneten, gleich stark auf Zug bzw. Druck belasteten Pfählen kompensieren sich die vertikalen Komponenten und es ergibt sich als Resultierende eine genau horizontale Kraft auf den zentralen Fundamentkörper bzw. Monopfahl. Sofern der Schnittpunkt der Achsen der seitlichen Pfähle in Höhe der Bodenoberfläche liegt, wird durch die Summe der seitlichen Pfahlkräfte dort auch kein Moment erzeugt. Das erwünschte Drehmoment kommt vielmehr dadurch zustande, dass sich der zentrale Monopfahl in dessen unteren Teil in gegensätzlicher Richtung seitlich im Boden abstützt. Die Momentaufnahme erfolgt also im Zusammenwirken mit dem mittleren Pfahl und dessen Biegesteifigkeit, nicht allein durch Zusammenwirken lediglich seitlich angeordneter Pfähle wie bei manchen Pfahlgruppen.
Für derartige schräge Zusatzpfähle bestehen bei einem zentralen Pfahl mit Gittermast günstige Möglichkeiten der Krafteinleitung, weil diese nicht nur an dem oberen Teil des Fundamentsrohrs möglich ist, sondern durch die Anschlüsse zu dem Fachwerk eine zusätzliche Aussteifung vorliegt. Falls seitliche Stützen nachträglich gesetzt werden, sind entsprechende Durchführungen im Monopfahl zu berücksichtigen. Seitliche Stützen können auch optional in Abhängigkeit von den erreichten Rammenergien geplant werden.

Als eine weitere Ausführungsform der Erfindung ist vorgesehen, den Meeresboden um den Monopfahl durch geeignete Maßnahmen, vorzugsweise Betoninjektionen, zu verfestigen. Zweckmäßig ist es dabei, wenn der Monopfahl geeignete Löcher oder Widerlager aufweist, um eine Betoninjektion zu ermöglichen bzw. um eine druckkraftschlüssige Verbindung zwischen injiziertem Beton und Monopfahl herzustellen.
An Stelle einer völlig geschlossenen Hüllfläche könnte auch innerhalb des Bodens eine fachwerkähnliche Struktur hergestellt werden, die durch geeignete Ausgestaltung eine seitliche Kraftabtragung ermöglicht. Denkbar wäre weiterhin das teilweise Einrammen mehrerer unten überstehender Stützen des Fachwerkes, wobei anschließend das Erdreich zwischen diesen durch Betoninjektionen verfestigt würde, so dass zwischen Stützen und verfestigtem Boden eine Gesamtwirkung entsteht, die einem Monopfahl ähnlicht.

Bei der Herstellung von Türmen für Windkraftanlagen werden üblicherweise zunächst die Brammen, ein Zwischenprodukt bei der Stahlherstellung, zu Blechen gewalzt, diese werden dann gebogen und schließlich wieder - bei großen Rohren meist aus mehreren Segmenten - zu Rohren zusammengeschweißt.
Bei größeren Fachwerktürmen der Offshore-Industrie werden üblicherweise Rohre verwendet, um schweißfähige Wandstärken zu verarbeiten. Bei Rohren ergeben sich allerdings ungünstige Kraftverläufe und Spannungsspitzen mit erhöhter Materialermüdung, an den Einmündungsstellen.

Durch das erfindungsgemäße Verfahren zur Herstellung der Tragkonstruktion soll die Herstellung der Stützen dadurch vereinfacht werden, dass die bei der Stahlherstellung entstehenden Rohlinge bzw. Brammen (meist bis 20 cm dick) direkt zu Stäben gewalzt werden bzw. die Brammen direkt in Stabform gegossen werden. Bevorzugt wäre eine Umformung zu runden Stäben, denkbar wären aber auch vieleckige Stäbe bzw. fertigungstechnisch günstige Gestaltungen. Hierfür wären die Brammen mit geeigneten Profilen in Längsrichtung oder abschnittsweise im Umkreis zu walzen. Eine Führung und Drehung der Brammen um ihre Längsachse zusätzlich zu einer Bewegung in Längsrichtung könnte dies unterstützen. Dabei wäre es möglich, einen Teil der Stablängen häufiger bzw. zusätzlich mit anderen Walzwerkzeugen zu bearbeiten, um diese zu einem geringerem Querschnitt auszuwalzen, womit sich eine konusförmige Gestalt des Gesamtstabs ergäbe. Dies entspricht dem üblichen Kraftverlauf bei Türmen für Windkraftanlagen als Folge der unten zunehmenden Momentlasten. Die anzuschweißenden Querverstrebungen, die geringere Kräfte aufnehmen müssten, bestünden in zweckmäßiger Ausführung wieder aus Hohlprofilen mit gut schweißbaren Wandstärken, vorzugsweise rohrförmigen.
An den Enden bzw. vorzugsweise am unteren Ende könnten die Stäbe allmählich zu flacheren Bögen bzw. Zylindersegmenten umgeformt werden. Dies könnte durch geeignete Walzeinrichtungen geschehen, die lediglich das Ende der umzuformenden Brammen erreichen, während die Brammen in Längsrichtung bewegt werden. Denkbar wäre aber auch ein gesonderter Arbeitsschritt, in dem die Rohlinge um die Längsachse bewegt und dabei an den Enden umgeformt werden. Gegebenenfalls wären bei der Umformung auch Schmiedetechniken (stoßartige Umformung) einzusetzen. Vorteilhaft könnte es auch sein, den Rohling in diesem Übergangsbereich weniger in Längsrichtung auszuwalzen, so dass der gesamte Querschnitt im Übergangsbereich gegenüber dem übrigen Stab etwas vergrößert ist.

Möglich wäre für eine konusartige Ausführung des Übergangsbereichs aber auch ein Auswalzen zu Segmenten eines Zylindermantels. Dann könnten mehrere dieser Stabenden am unteren, gegebenenfalls auch am oberen Ende der Länge nach zu einem Rohr zusammengeschweißt werden, etwa zu dem oberen Teil des Monopfahls. Danach würden die Verstrebungen eingeschweißt.

In Falle von betonierten Pfahlfundamenten könnten die Stäbe, evtl. zersägt und damit in mehrere Einzelstäbe aufgeteilt und aufgebogen, einen Teil der Bewehrung bilden.

Vorteilhaft ist in diesem Zusammenhang, daß die Massen von Stäben für größere Offshore-Windkraftanlagen (z.B. 40-50 cm Durchmesser) in der Größenordnung der üblicherweise bei der Stahlherstellung entstehenden Brammen liegen würde. Die benötigten Längen von möglichst über 40 m übersteigen die übliche Länge dieser Rohlinge, eine angepasste Spezialfertigung erscheint jedoch möglich.

Herkömmliche Schweißverfahren, bei denen ein keilförmiger Freiraum lagenweise mit Schweißgut gefüllt wird, sind für die Verbindung großer Stäbe nicht geeignet. Falls die Stützen nicht in der benötigten Länge aus einem Stab hergestellt werden können, müssen die parallelen Flächen zweier an der Schmalseite miteinander zu verbindender Stäbe vorzugsweise durch Einbringen von Schweißgut und anschließende gezielte Erhitzung verbunden werden. Denkbar wäre ein fortlaufender Arbeitsfortgang, bei dem die Stäbe oder der Schweißgerät gegeneinander rotierend bewegt werden, dabei fortlaufend der Schweißdraht abgewickelt und anschließend angeschweißt wird, so dass sich das Schweißgut spiralförmig in dem Spalt aufbaut, oder ein sukzessiver Aufbau des Schweißguts in geraden Lagen. Nach dem Schweißen könnte eine erneute thermische Behandlung erfolgen, etwa durch Anregung elektrischer Ströme in dem Metallstab in Bereich der Schweißstelle. Gegebenenfalls ist ein schräger oder keilförmiger Anschnitt der Stäbe vorteilhaft, um die Schweißfläche zu vergrößern, und damit die übertragene Kraft zu verbessern. Gegebenenfalls können zusätzlich Rohre als Muffen über die Stabverbindungen geschoben und beidseitig angeschweißt werden.

Eine weitere besondere Ausführungsform der erfindungsgemäßen Tragkonstruktion sieht vor, die Verbindung vom oberen Ende der Fachwerkskonstruktion zur Gondel der Offshore-Windkraftanlage durch ein einziges Rohr herzustellen.

Rohrförmige Stahlpfähle werden üblicherweise gerammt, wobei gegebenenfalls die Mantelreibung zum Boden auf der Innen- wie der Außenseite des Pfahl zu überwinden ist. Bei gebohrten Pfählen ist Gefahr einer Beeinträchtigung der Lagerungsdichte des umliegenden Bodens während des Bohrens nachteilig.

Gebohrte Pfähle werden daher oft betoniert, wobei etwa entstehende Hohlräume im Boden mit Beton gefüllt werden.
Bei einem mit einem Monopfahl verschweißten Gittermast ist mit ungünstigeren Rammmöglichkeiten zu rechnen, so dass bevorzugt schonendere Verfahren einzusetzen sind.

Erfindungsgemäß ist daher eine Unterstützung des Rammens durch gleichzeitiges Bohren vorgesehen. In günstiger Ausprägung dieses Verfahrens könnte jeweils bis knapp oberhalb der Unterkante des Pfahls (Pfahlkopf) gebohrt werden, und dabei das im Inneren des Pfahls vorhandene Erdreich abgetragen werden. Ein anschließender Rammstoß wäre dann dadurch erleichtert, dass das unterhalb des Pfahlkopfs vorhandene Erdreich auch nach innen ausweichen könnte, und dass keine Mantelreibung auf der Innenseite des Pfahls auftritt.

In der Praxis könnte dies durch parallel ablaufende Arbeitsvorgänge erreicht werden, wobei eine gewisse Angleichung des Arbeitsfortschrittes beider Vorgänge dadurch erreicht würde, dass die Rammstöße weniger Fortschritt bewirken, wenn der Bohrvorgang noch nicht die Pfahlsohle erreicht hat. Gegebenenfalls ist eine Druckhaltung im Pfahlinneren erforderlich, die z.B. durch eine Suspension mit ähnlichem spezifischen Gewicht wie das umgebende Erdreich erreicht werden kann, damit das umliegende Erdreich nicht durch seinen statischen Druck unter dem Pfahlkopf in das aufgebohrte Pfahlinnere eindringt. Das Aufbohren des Pfahlinneren ermöglicht auch ein Ausbetonieren des Pfahls oder die Verwendung von Pfählen mit innenliegenden Rippen bzw. anderen Versteifungen, die etwa der Beulgefahr entgegenwirken können.

Eine besonders bevorzugte Ausprägung des Fachwerks beruht auf der Lehre, das Kippmomente und mit diesen verbundene Horizontalkräfte bevorzugt durch gegeneinander geneigte Stäbe aufgenommen werden können, in der Regel durch Ausbildung von Dreiecken. Da Kippmomente in beliebiger Richtung grundsätzlich in zwei senkrecht zueinander stehende Komponenten aufgelöst werden können, wird bei senkrechten Stützen mindestens je eine Verstrebung in zwei Richtungen benötigt. Dazu kommt regelmäßig eine Verstrebung in einer dritten Richtung, auch zur Aufnahme von axialen Momenten.

Durch die Schrägstellung der Stützen sollen diese in die Lage versetzt werden, in Richtung der Stützenachse neben den vertikalen auch horizontale Kraftkomponenten zu übertragen. Damit soll die Zahl der erforderlichen Verstrebungen reduziert werden, somit auch die Zahl der entsprechenden Verbindungsstellen. Um Überkreuzungen der Stützen bei Schrägstellung zu vermeiden, werden diese jeweils in gleicher Drehrichtung um die Mittelachse des Fachwerks geneigt, so dass sich eine spiralähnliche Anordnung der Stützen ergibt, allerdings mit vorzugsweise langgestreckter Gestalt. Bei größerer Gesamtverdrehung der Stützen werden in der Regel mehrere geradlinige Stützenabschnitte aufeinander folgen, so dass sich eine eckige Form der von den Stützen gebildeten "Spirale" ergibt.
Es ist zu beachten, dass zwei benachbarte Stützen durch die Neigung nicht in einer gemeinsamen Ebene liegen.

Bei drei Stützen bietet es sich an, die Höhenlage der Knickstellen um jeweils 1/3 der Länge bzw. Höhe eines Stützenabschnitts zu versetzen, und eine Verstrebung jeweils von einer Knickstelle der Stütze zur Knickstelle der nächsten Stütze zu führen. Je nachdem, ob die Knickstelle der jeweils benachbarten Stütze um 1/3 nach oben oder nach unten versetzt ist, wird eine Verstrebung bzw. werden zwei Verstrebungen benötigt.

Zusätzlich kann die schräge Anordnung der Stäbe das Verhalten bei Eisgang verbessern. Wenn die eisbrechende Eigenschaft im Vordergrund steht, kann eine Schrägstellung der Stützen evtl. nur in Nähe des Meeresspiegels vorgenommen werden

Im folgenden soll die Erfindung an Hand von Zeichnungen näher erläutert werden. Es zeigen:
- Fig. 1: Die schematische Darstellung einer erfindungsgemäßen Tragkonstruktion
- Fig. 2: Die Draufsicht auf eine Ausführungsform der Verbindung des Fachwerkes mit dem Monopfahl
- Fig. 3: Die Draufsicht auf eine Ausführungsform der Verbindung des Fachwerkes mit dem Monopfahl
- Fig. 4: Die Draufsicht auf eine Ausführungsform der Verbindung des Fachwerkes mit dem Monopfahl
- Fig. 5: Die schematische Darstellung einer erfindungsgemäßen Tragkonstruktion mit zwei seitlich angeordneten Stützen
- Fig. 6: Die schematische Darstellung einer erfindungsgemäßen Tragkonstruktion mit einer Ausführungsform der Seilabspannung
- Fig. 7: Die Seilabspannung gemäß Fig.6 in der Draufsicht
- Fig. 8: Eine Tragkonstruktion mit rohrförmig ausgebildeten Stützen
- Fig. 9: Die Draufsicht auf die Tragkonstruktion gemäß Fig. 8
- Fig. 10: Die Seitenansicht einer Tragkonstruktion mit seitlicher Seilabspannung
- Fig. 11: Die Draufsicht auf die konusartige Verbindung von drei rohrförmigen Stützen gemäß Fig. 12
- Fig. 13: Einen Ausschnitt der Draufsicht aus Fig.11
- Fig. 14: Die Draufsicht auf die zweckmäßige Ausgestaltung eines Konus.

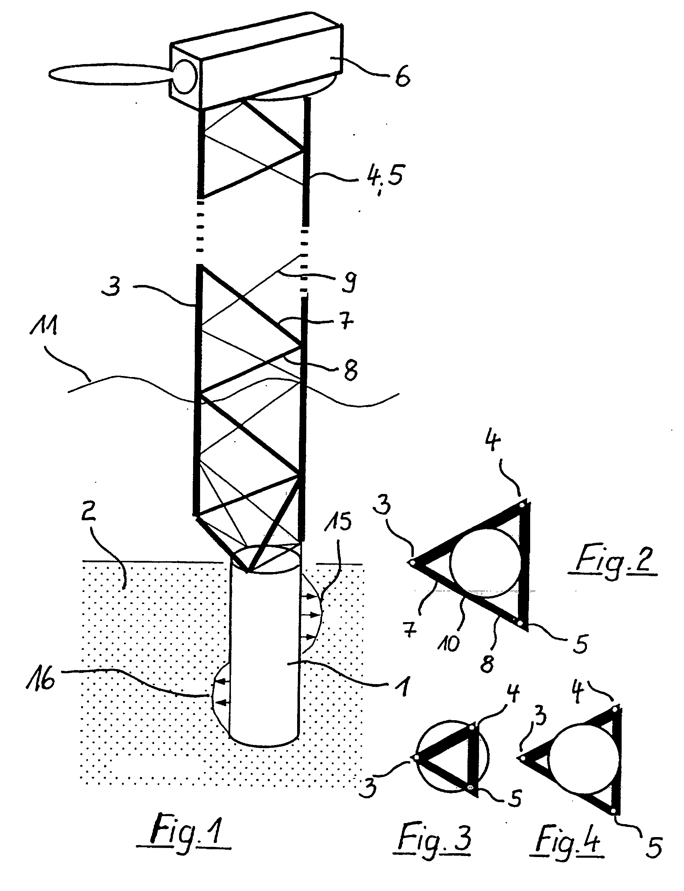

In **Figur 1** ist eine Tragkonstruktion mit einem großen zylinderförmigen Rohr als Monopfahl 1 unterhalb des Meeresbodens 2 dargestellt. Auf dem Monopfahl 1 sind drei Stützen 3, 4 und 5 mit kleinerem Durchmesser angeschweißt sind, die ihrerseits durch schräge Verstrebungen 7, 8 zu einer fachwerkartigen Struktur verbunden sind. Die vordere Stütze 4 verdeckt die hintere Stütze 5. Auf den Stützen 3, 4 und 5 ist die Gondel 6 angeordnet. Die in der gleichen Ebene liegenden Verstrebungen 7, 8 sind mit starken Linien und die hinteren Verstrebungen 9 mit dünnen Linien dargestellt.

**Figur 2** zeigt eine Ausführungsform des Grundrisses der erfindungsgemäßen Tragstruktur, bei der die von den Stützen 3 und 4 gebildete Ebene den Monopfahl 1 tangential berühren. Das obere Ende der Ebene ist mit dem Bezugszeichen 6 bezeichnet. Die Stützen 3, 4 und 5 sind in **Fig. 1** kreisförmig dargestellt.

In der Ebene zwischen den Stützen 3 und 5 befinden sich zwei untere Verbindungsstreben 7 und 8, die an der Stelle 10 die mit dem Monopfahl 1 verbunden sind. Günstige Verhältnisse der Kraftübertragung an den in radialer Richtung weniger belastbaren Monopfahl 1 ergeben sich dadurch, dass die Verstrebungen 7 und 8 ungefähr tangential zur Oberfläche des Monopfahles 1 verlaufen. In vielen Belastungsfällen werden sich die horizontalen Anteile der von 7 und 8 eingeleiteten Kräfte teilweise kompensieren.

Die Wellen können mit geringem Widerstand die offene Tragstruktur durchdringen.

Abgesehen von einer hier nicht dargestellten Zugangshilfe ergeben sich in der Meereshöhe 2 keine besonderen Änderungen der Tragkonstruktion.
Der Maschinenanteil der Windkraftanlage mit den Rotoren ist wie üblich mit der Gondel 6 am oberen Ende der Tragkonstruktion drehbar befestigt.

**Fig. 3** zeigt einen Grundriss der Tragkonstruktion mit einem zu Fig. 2 etwa halb so großem Abstand der Stützen 3, 4 und 5 untereinander. Damit sind die Verstrebungen 7 und 8 nicht erforderlich.

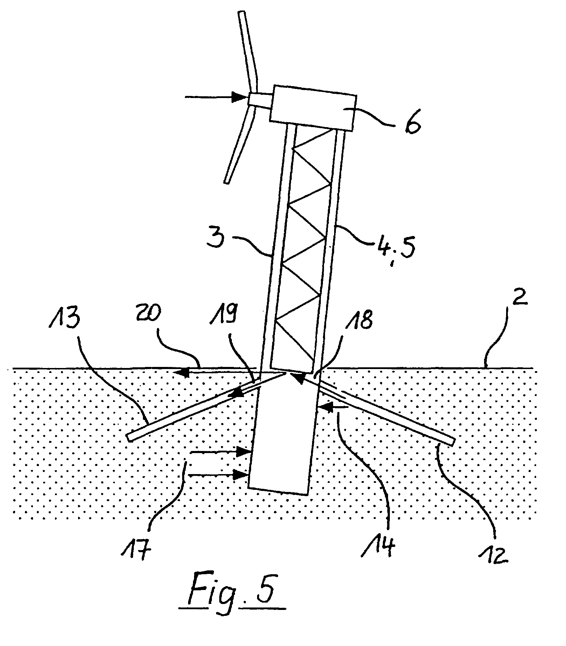

Aus **Fig. 4** ist eine weitere Ausführungsform eines Grundrisses der Tragkonstruktionzu entnehmen, mit einem solchen Verhältnis von Durchmesser des Monopfahles 1 und Abstand der Stützen 3, 4, und 5, dass sich insgesamt sechs Stellen für die feste Verbindung des Monopfahles 1 mit den Verbindungsstreben ergeben.

**Figur 5** beschreibt den Kraftfluss in Verbindung mit seitlich am Monopfahl 1 angebrachten Stützpfählen 12 und 13.

Die im Turmbereich auf den Rotor einwirkende Kraft verursacht eine hier übertrieben dargestellte seitliche Verdrehung der Tragkonstruktion einschließlich des Monopfahles 1. Besondere Bedeutung hat die Biegesteifigkeit des Monopfahles 1 gegenüber der Biegung um eine horizontale Achse (hier völlig steif dargestellt).
Bezugszeichen 14 kennzeichnet den auch ohne seitliche Pfähle wirksamen seitlichen Kraftangriff im oberen Teil der Hüllfläche des Monopfahles 1 vom Boden als Folge der durch die seitliche Pressung 15 auf den Monopfahl ausgeübten Gegenkraft. Im unteren Teil des Monopfahles 1 wirkt die durch die Bodenpressung 16 verursachte Gegenkraft 17 einer weiteren Verkippung entgegen. Die Mantelreibung im zentralen Teil des Monopfahles 1 wird in der Darstellung vernachlässigt.
Von den beiden seitlichen Pfählen 12 und 13 wird eine Druckkraft 18 und eine Zugkraft 19 abgegeben, die hier mit übereinstimmender Kraftstärke dargestellt zu einer resultierenden Kräftesumme 20 führen, die etwa in Höhe des Meeresbodens 2 an der zentralen Tragstruktur angreift.
Zu einer Kompensierung der durch die Höhenlage der äußeren Krafteinwirkung auf den Rotor verursachten Momentaufnahme der Tragkonstruktion kommt es erst durch das Zusammenwirken der Kräfte 14 und 20 mit der Gegenkraft 17 im unteren Teil des Monopfahles 1. Nicht die Höhenlage der Kraft 20, sondern die Steifigkeit des zentralen Monopfahles 1 und die dadurch entstehende Kraft 17 sind für die Momentabtragung ausschlaggebend.

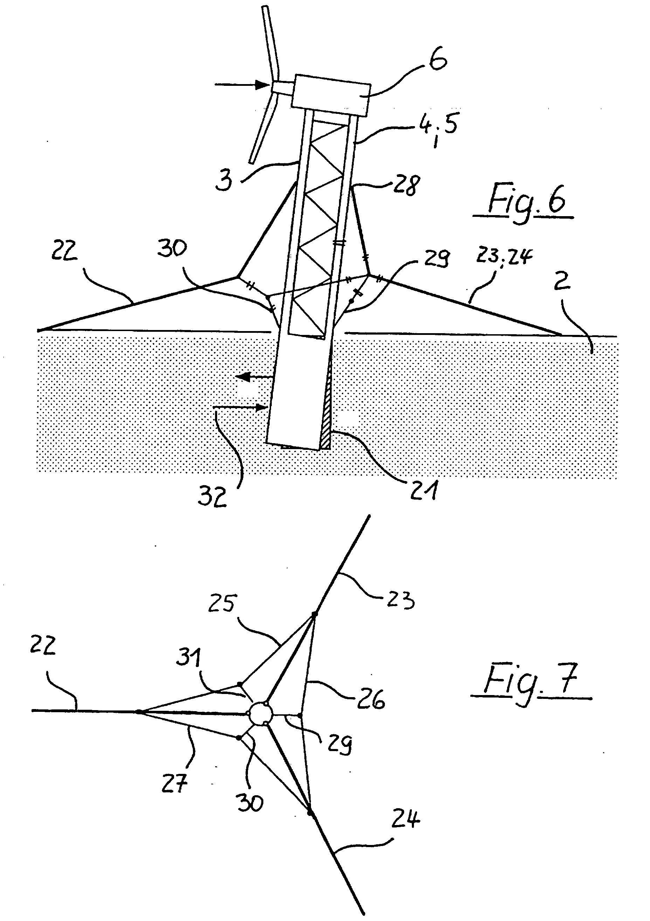

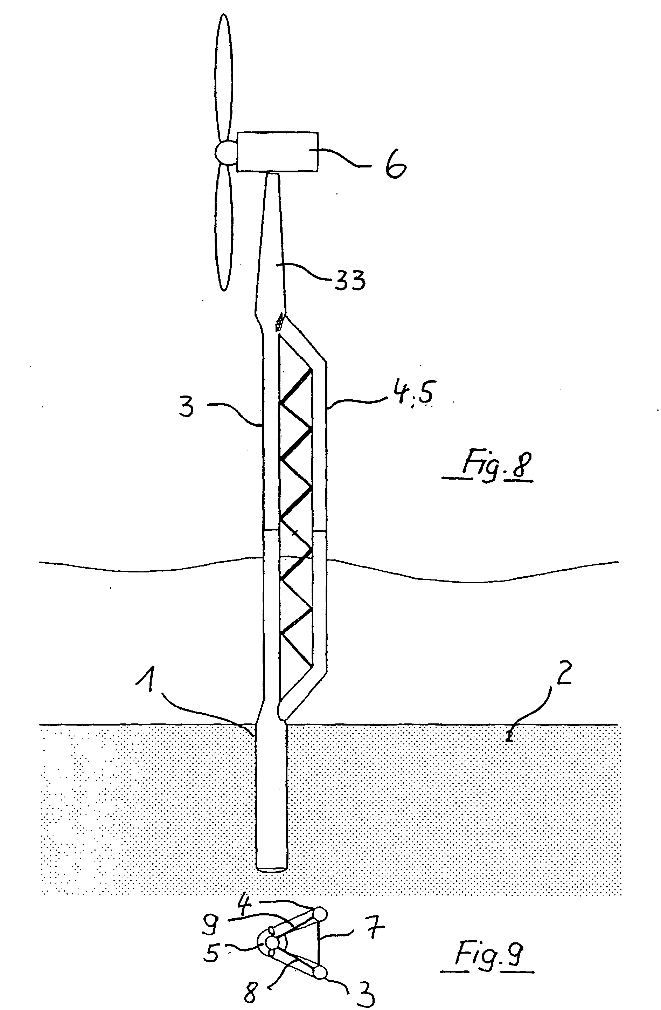

In den **Figuren 6 und 7** wird eine Tragkonstruktion mit einer Ausführung einer Seilabspannung dargestellt. Die Tragkonstruktion besteht wiederum aus einem großen in den Meeresboden 2 eingebrachten - und hier nicht sichtbar zylinderförmigen Rohr - als Monopfahl 1. Die unbelastete Tragkonstruktion ist mit dem Bezugszeichen 21 gekennzeichnet. Auf dem Monopfahl 1 sind wiederum drei Stützen 3, 4 und 5 angeschweißt, von denen die Stütze 5 durch die Stütze 4 verdeckt ist. Die Stützen 3, 4 und 5 sind mit Verstrebungen zu einem Fachwerk verbunden.

Die oben an der Windkraftanlage angreifenden äußeren Kräfte drücken die Tragkonstruktion im oberen Teil nach rechts und spannen das linke äußere Halteseil 22, was durch das Nachgeben der rechten Halteseile 23 und 24 begünstigt wird. Die Halteseile 22, 23 und 24 sind in einer annähernd horizontalen Ebene durch die Verbindungsseile 25, 26 und 27 miteinander verbunden, wobei diese ein annähernd gleichseitiges Dreieck bilden. Je nach Geometrie der Seile kann erreicht werden, dass sich die Verbindungsseile 25, 26 und 27 schneller bewegen als die Tragkonstruktion im Befestigungspunkt 32. Damit kann eine Dämpfung von Bewegungen der Tragkonstruktion im Wasser erreicht werden.

An den Verbindungsseilen 25, 26 und 27 weitere Seile 29, 30 und 31 angeordnet, die zu einem tiefer liegenden Punkt des Monopfahles 1 verlaufen und an diesem angeordnet sind.

Durch die angreifenden Kräfte wird der Monopfahl 1 gegenüber seiner ursprünglichen Lage nach links gegen den Boden gedrückt, wodurch eine Gegenkraft 28 durch das Bettungsmodul des Bodens entsteht. Eine große Steifheit der Tragkonstruktion kann teilweise durch die flexible Aufhängung ausgeglichen werden. In der vorliegenden Figur ist der Nulldurchgang der seitlichen Auslenkung des steif dargestellten Fachwerkes gerade in Meereshöhe 2, was auch der seitlichen Lastabtragungsfähigkeit des Monopfahles 1 entspricht.

Der Effekt der Nachgiebigkeit von untereinander verbundenen Halteseilen kann anschaulich dargestellt werden, wenn man die Bewegungsmöglichkeiten eines außen am Boden befestigten Seil- bzw. Stabsystems, dessen Elemente zunächst nicht gedehnt werden, betrachtet. Am Scheitelpunkt ergibt sich eine horizontale Bewegung der oberen Verbindung der Seile, die dann in eine bogenfömige Abwärtsbewegung übergeht. Wird nun, von der Ausgangslage ausgehend, die Höhe des Verbindungspunktes durch die Verbindung mit einem vertikalen Element, beispielsweise einem zentralen Turm, konstant gehalten, ist anfangs eine freie Bewegung möglich, die dann aber in zunehmendem Maße eine Dehnung der Seile erfordert.

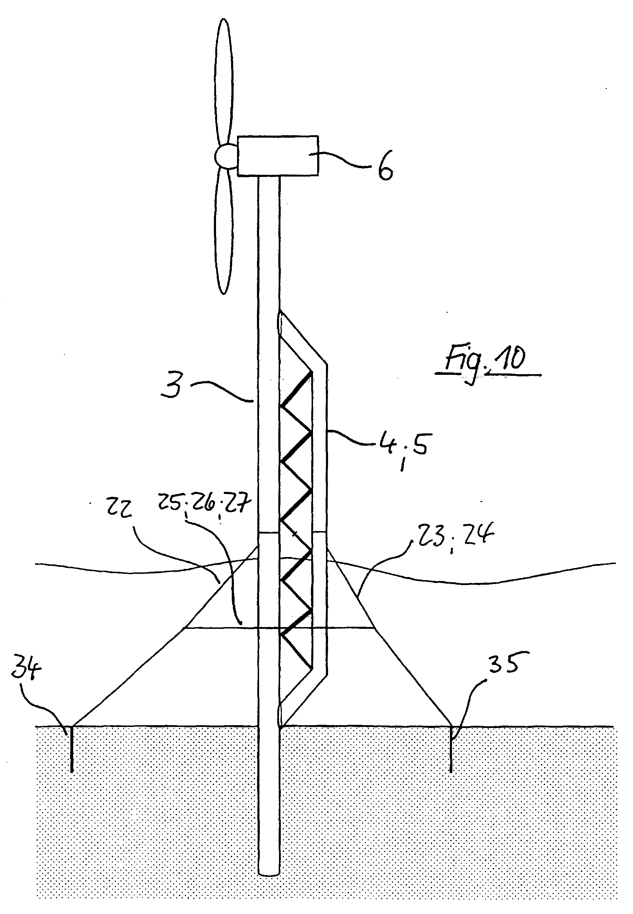

Die **Figuren 8 und 9** zeigen eine erfindungsgemäße Tragkonstruktion, bei der die Stützen 3, 4 und 5 rohrförmig ausgebildet sind und die Stütze 5 wieder durch die Stütze 4 verdeckt ist.

Deutlich ist zu erkennen, dass die Stützen exzentrisch zueinander angeordnet sind und die Stütze 3 die gesamte Tragkonstruktion durchläuft und in ihrem oberen Teil rohrförmigen Abschnitt 33 die Gondel 6 aufnimmt. Die Stütze 3 ist in **Fig. 8** dreifach konisch dargestellt, mit einer Verjüngung im Bereich nahe des Meeresbodens 2 und mit einer Verjüngung im oberen Teil 33 des Fachwerkes, in dem geringere Momente vorliegen.
In der Draufsicht gemäß Fig. 9 ist die Verstrebung 7 axial in die Stützen 3 und 4 mündend dargestellt, während die Verstrebungen 8 und 9 von den Stützen 3 und 4 ausgehend mehr am Rand in die durchlaufende Stütze 5 einmünden.

In **Figur 10** ist das vorteilhafte Zusammenwirken einer seitlichen Seilabspannung mit einem Monopfahl 1, der innerhalb des Fachwerkes als Stütze 3 fortgeführt wird, während die Stützen 4 und 5 wie in **Fig. 9** dargestellt, rohrförmig ausgebildet sind.
Die Seilabspannung besteht aus den drei Halteseilen 22, 23 und 24 (letzteres nicht dargestellt), die in Meereshöhe 11 am Fachwerk angeordneten und schräg zum Meeresboden verlaufen und in diesem an den Punkten 34 und 35 verankert sind. Die Halteseile 22, 23 und 24 sind in der horizontalen Ebene durch die ein gleichseitiges Dreieck bildenden Verbindungsseile 25, 26 und 27 miteinander verbunden. Die Seilabspannung reduziert die Momentbelastung im unteren Teil der Tragkonstruktion, wodurch die größten Momente in deren mittleren Teil verbleiben. Dort bewirkt das seitlich angeordnete Fachwerk eine zusätzliche Aussteifung. Der Übergang zwischen dem Monopfahl 1 und dem Fachwerk ist damit nicht mehr im Bereich der größten Belastung, wie es bei einer unverspannten Ausführung der Fall wäre.

Die **Figuren 11 bis 14** zeigen eine Ausführungsformen der konusartigen Verbindungen rohrförmiger Stützen in Seitenansichten beziehungsweise in Draufsichten.

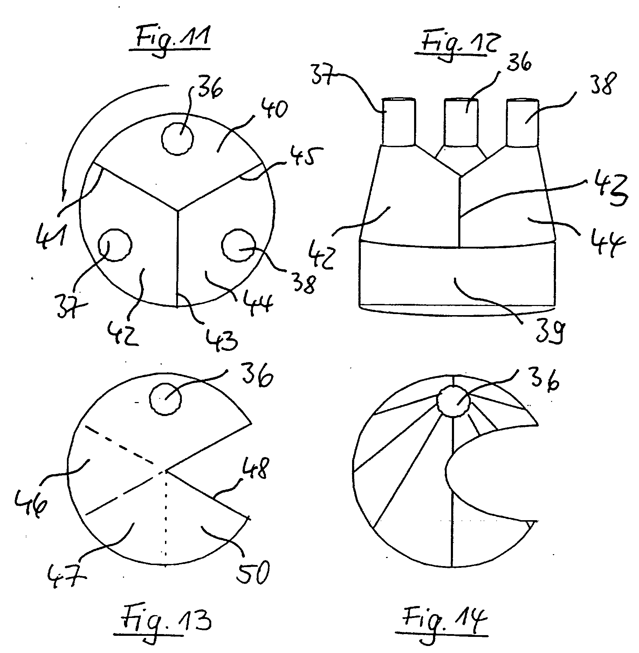

Die **Fig. 12** stellt die Seitenansicht auf eine von vier kreisförmigen Rohren dar, mit den als Stützen fungierenden Rohren 36, 37 und 38 die mit dem größeren Rohr 39 verbunden sind. Alle vier Rohre 36 bis 39 sind achsparallel angeordnet und der Querschnitt der Rohre 36 bis 38 liegt vollständig innerhalb des verlängerten Querschnittes des Rohres 39.

**Fig. 12** gibt die Draufsicht der Ausführung gemäß **Fig. 11** wieder. Der von Rohr 36 zu Rohr 39 überleitende exzentrische Konus 40 ist in **Fig. 11** als ein 120°-Sektor zu sehen. Unterhalb der Linie 41 zwischen den Rohren 36 und 38 beziehungsweise bei gedanklicher Bewegung entgegen dem Uhrzeigersinn hinter der Linie 41, beginnt der zum Rohr 37 führende Teilkonus. Konus 40 taucht an der Linie 41 unter den Konus 42 unter und wird dort fortgesetzt. An der Linie 43 taucht der zu Rohr 36 führende Konus 42 unter den zu Rohr 38 führenden Konus 44 unter. Dieser wird wiederum bei der in Betrachtungsrichtung "vorderen" Begrenzung des erstgenannten Konus 40 an der Linie 45 von der obersten Position verdrängt.
Die **Fig. 12** zeigt den Beginn des Teilkonus 40 an der Linie 43. Die Oberkante des Teilkonus 42, der unter dem Konus 44 fortgeführt ist, wurde hier gestrichelt dargestellt.

In der in **Fig. 13** dargestellten Draufsicht ist der zu Rohr 36 führende Teilkonus, der in maximaler Ausprägung der Form eines pac-man ähnelt, dargestellt.
Im oberen Drittel des Kreisumfanges nimmt er die oberste Position ein. Im linken Sechstel (Sektor 46) liegt er unterhalb des Konus 42, aber noch oberhalb des Konus 44, soweit er bis hierher reicht. An der Linie würde der Konus 44 den Konus 40 von unter her durchschneiden, statt dessen endet der Teil-Konus 44 spätestens an dieser Stelle. Im Sektor 47 nimmt der Konus 40 somit die untere Position unter Konus 42 ein. Das gleiche gilt im Sektor 50, jedoch ist dort weiter oben noch der Konus 44 ausgeführt. An der Linie 48 würde nun der Konus 40 den Konus 42 von unten her schneiden, daher endet der Teil-Konus 40 dort, beziehungsweise wir der gedachte Voll-Konus danach nicht mit Material ausgeführt. Oberhalb, beziehungsweise hinter der Linie 45 hat der gedachte Voll-Konus 40 wieder die oberste Position und wird dort wieder mit Material ausgeführt.

**Figur 14** zeigt nun eine zweckmäßige Ausprägung des Teilkonus 40 mit abgerundeter Ecke uns sanft zum Rohr 39 hin auslaufenden Enden. Zusätzlich sind einige Geraden innerhalb der Wölbung des Konus 40 dargestellt. Die theoretische Schnittlinie 49 zum Teilkonus 42 wird jedoch nicht erreicht, wenn dieser ebenso ausgeschnitten wird.

### BEZUGSZEICHENAUFSTELLUNG

- 1: Monopfahl
- 2: Meeresboden
- 3: Stütze
- 4: Stütze
- 5: Stütze
- 6: Gondel
- 7: Verbindungsstrebe
- 8: Verbindungsstrebe
- 9: Verbindungsstrebe
- 10: Berührungsstelle
- 11: Meereshöhe
- 12: Stützpfahl
- 13: Stützpfahl
- 14: Kraft
- 15: seitliche Pressung
- 16: Bodenpressung
- 17: Kraft
- 18: Druckkraft
- 19: Zugkraft
- 20: Kräftesumme
- 21: unbelastete Tragkonstruktion
- 22: Halteseil
- 23: Halteseil
- 24: Halteseil
- 25: Verbindungsseil
- 26: Verbindungsseil
- 27: Verbindungsseil
- 28: Gegenkraft
- 29: Seil
- 30: Seil
- 31: Seil
- 32: Befestigungspunkt
- 33: oberer Abschnitt
- 34: Verankerung
- 35: Verankerung
- 36: Rohr
- 37: Rohr
- 38: Rohr
- 39: Rohr
- 40: Konus
- 41: Linie
- 42: Konus
- 43: Linie
- 44: Konus
- 45: Linie
- 46: Sektor
- 47: Sektor
- 48: Linie
- 49: Schnittlinie
- 50: Sektor

## Patentansprüche

1. Meerestechnische Tragkonstruktion, insbesondere für eine Offshore-Windkraftanlage, mit einem Turm und einem unterhalb des Turmes angeordneten und mit diesem verbundenen Fundament, **dadurch gekennzeichnet, dass**
- der Turm wenigstens in einem oberhalb an das Fundament anschließenden Abschnitt aus mehreren statisch zusammenwirkenden, ein vergleichsweise schlankes Fachwerk ergebenden Stützen (3;4;5) und Verstrebungen (7;8;9) gebildet ist, zwischen denen Wasser und Luft durchströmen können und
- das Fundament ein einziger, weitgehend in den Meeresboden eingebetteter Pfahl (1), im folgenden als Monopfahl bezeichnet, ist, der Kippmomente der Tragkonstruktion vor allem durch seitliche Bettung in den Boden überträgt und
- der untere Teil des Fachwerkes in seiner Breite das etwa Vierfache des Durchmessers des Monopfahles (1) nicht übersteigt.

2. Tragkonstruktion nach Anspruch 1, **dadurch gekennzeichnet, dass** oberhalb des Fachwerkes ein weiterer Turmteil, vorzugsweise als Rohrturm ausgebildet, angeordnet ist.

3. Tragkonstruktion nach Anspruch 1 oder 2, **dadurch gekennzeichnet , dass** der Durchmesser des Monopfahles (1) und die Abstände der Stützen (3;4;5) untereinander so gewählt sind, dass im Übergangsbereich zwischen den Stützen (3;4;5) und dem Monopfahl (1) die von den Stützen (3;4;5) eingeleiteten Kräfte ohne größere Versprünge im Kraftfluss oder mit durchgehender Wirkungslinie des Kraftflusses in den Monopfahl (1) geleitet sind und/oder dass die Tragkonstruktion zusätzlich eine Seilabspannung aufweist, wobei die Seilabspannung aus mehreren, vorzugsweise drei Halteseilen (22;23;24) besteht, die mit ihrem oberen Ende am Fachwerk bzw. einem oberen Turmteil befestigt sind und schräg zum Meeresboden (2) verlaufen und in diesem verankert sind.

4. Tragkonstruktion nach Anspruch 3, **dadurch gekennzeichnet, dass** die zwischen Turm und Meeresboden (2) gespannten Halteseile (22;23;24) durch Verbindungsseile (25;26;27) miteinander verbunden sind, wobei die Zugkräfte in den Verbindungsseilen (25;26;27) einen am Befestigungspunkt geknickten Verlauf der Halteseile (22;23;24) verursachen, und die Verbindungsseile (25;26;27) vorzugsweise annähernd horizontal in einer Ebene liegen und im Falle von drei Halteseilen (22;23;24) vorzugsweise ein gleichseitiges Dreieck bilden.

5. Tragkonstruktion nach einem der Ansprüche 3 oder 4, **dadurch gekennzeichnet, dass** von den zwischen Turm und Meeresboden (2) verlaufenden Halteseilen (22;23;24) weitere Seile (29;30;31) zu tiefer gelegenen Stellen des Turms oder dem oberen Teil des Monopfahles (1) führen, die ihrerseits durch Verbindungsseile (25;26;27) verbunden sind.

6. Tragkonstruktion nach einem der Ansprüche 3 bis 5, **dadurch gekennzeichnet, dass** von den an den Halteseilen (22;23;24) angreifenden Verbindungsseilen (23;24;25) weitere Seile zu tiefer gelegenen Stellen des Turms oder dem oberen Teil des Monopfahles (1) führen.

7. Tragkonstruktion nach einem der Ansprüche 3 bis 6, **dadurch gekennzeichnet, dass** an Stelle der Seile (22;23;24;25;26;27;29;30;31) bzw. eines Teils der Seile Stäbe oder andere bewegliche, auf Zug belastbare Trageelemente eingesetzt sind, vorzugsweise mit gelenkigen Verbindungen an den Verbindungspunkten von Halteseilen (22;23;24) und Verbindungsseilen (25;26;27).

8. Tragkonstruktion nach einem der Ansprüche 1 bis 7, **dadurch gekennzeichnet, dass** zur Dämpfung von Schwingungen an der Tragkonstruktion zusätzliche Körper als Strömungshindernis angeordnet sind und/oder die Stützen (3;4;5) in unterschiedlichen Abständen zur Mittelachse des Monopfahles (1) angeordnet sind.

9. Tragkonstruktion nach einem der Ansprüche 1 bis 8, **dadurch gekennzeichnet, dass** mindestens eine Stütze der Stützen (3;4;5) rohrförmig ausgebildet ist und einen größeren Durchmesser aufweist als die anderen Stützen, wobei diese Stütze vorzugsweise aus dem rohrförmigen Pfahl über ein konusartiges Übergangsstück mit um das Rohrinnere umlaufender Hüllfläche fortentwickelt ist.

10. Tragkonstruktion nach einem der Ansprüche 1 bis 9, **dadurch gekennzeichnet, dass** die Stützen (3;4;5) aufrecht angeordnete, vorzugsweise durch schräge Verstrebungen (7;8;9) miteinander verbundene Stahlprofile sind, wobei der Durchmesser des Monopfahls (1) und die Abstände der Stützen (3;4;5) zueinander so gewählt sind, dass der Achsabstand von zwei Stützen an deren unteren Ende oder bei nicht parallelen Stützen der Abstand der zum Monopfahl (1) hin verlängerten Achsen der Stützen
- bei drei Stützen zwischen den Beträgen aus dem Doppelten und dem Vierfachen von cos 30° multipliziert mit dem Radius des Monopfahles (1 ), abzüglich oder zuzüglich des Stützenradius, liegt;
- bei vier Stützen zwischen dem 1,41-fachen und dem Doppelten des Radius des Monopfahles (1), abzüglich oder zuzüglich des Stützenradius, liegt,
wobei eine Verbindung zwischen den Stützen (3;4;5) und dem Monopfahl (1) vorzugsweise durch je zwei Verbindungselemente hergestellt wird, die in der von jeweils zwei Stützen gebildeten Ebene angeordnet sind.

11. Tragkonstruktion nach einem der Ansprüche 1 bis 10, **dadurch gekennzeichnet, dass** der Monopfahl (1) und die rohrförmig ausgebildeten Stützen (3;4;5) je Stütze durch konusartig ausgebildete Übergangsstücke miteinander verbunden sind, wobei als Konus die Verbindung der Umfanglinien oder Schnittflächen zweier Stützen unabhängig davon, ob sie der mathematisch bestimmten Kegelform eines Konus folgen, bezeichnet ist.

12. Tragkonstruktion nach Anspruch 11, **dadurch gekennzeichnet, dass** die konusartigen Übergangsstücke eine Aussparung aufweisen, so dass mehrere Übergangsstücke ineinander verschiebbar sind.

13. Tragkonstruktion nach einem der Ansprüche 1 bis 12, **dadurch gekennzeichnet, dass** im oberen Drittel des Monopfahles (1) oder nahe des unteren Endes des Fachwerkes schräg zur Seite verlaufend zusätzlich mindestens ein Pfahl, vorzugsweise mit weniger als 50° Neigung, angeordnet ist, der vorzugsweise Zug- oder Druckkräfte durch Mantelreibung an den Boden überträgt wobei vorzugsweise der Meeresboden (2) um den Monopfahl (1) durch geeignete Maßnahmen, insbesondere Bodeninjektionen verfestigt ist.

14. Tragkonstruktion nach einem der Ansprüche 1 bis 13, **dadurch gekennzeichnet, dass** die Stützen des Fachwerks nicht vertikal angeordnet sondern geneigt sind, wobei die Stützen spiralähnlich zueinander verd Abschnitte einer Stütze vorzugsweise jeweils an den Knickstellen zwischen geraden Stützenabschnitten mit den Stützen verbunden sind.

15. Verfahren zur Herstellung einer Tragkonstruktion gemäß den Ansprüchen 1 bis 14, **dadurch gekennzeichnet, dass**
- Rohlinge oder Brammen aus der Stahlproduktion direkt zu Vollstäben umgeformt werden, die für die Stützen Verwendung finden sollen, und die in geeigneten Walz- oder Schmiede-Arbeitsgängen eine konische oder zylindrische Stabform oder ein Profil erhalten, und/oder bogenförmige Endbereiche erhalten, die zur Herstellung oder zum Anschluss eines Monopfahles vorgesehen sind,
- die Stützen mit Verstrebungen zu einem Fachwerk verbunden werden und
- das Fachwerk mit an sich bekannten Mitteln auf einem Monopfahl angeordnet wird.

16. Verfahren gemäß Anspruch 15, **dadurch gekennzeichnet, dass** die Vollstäbe an ihrem Querschnitt dadurch aneinander angesetzt werden, dass sie mit schmalem Spalt gegeneinander fixiert werden, Schweißgut in den Spalt eingeführt wird, vorzugsweise in Form eines Drahtes, und durch gezielten Energieeintrag, vorzugsweise mit in den Spalt gerichteten Laserstrahlen, eine lokale Erwärmung der Schweißstelle und das Schmelzen des Schweißguts gewährleistet wird.

17. Verfahren zur Errichtung der Tragkonstruktion gemäß den Ansprüchen 1 bis 14, **dadurch gekennzeichnet, dass** der rohrförmig ausgebildete Monopfahl durch Rammung gegenüber dem außen anstehenden Boden vorgetrieben wird, wobei während des Einbaus des Monopfahls der in seinem Inneren befindliche Meeresboden ausgebohrt wird.

## Claims

1. Sea-technology support structure, in particular for an off-shore wind energy installation, with a tower and foundation located below the tower and connected thereto, **characterized by**
- The tower being formed, at least above a section connected to the foundation, by a number of statically connected, a relatively slender system of supports (3;4;5) and struts (7;8;9) between which water and air can flow and
- The foundation is a monopole (1) embedded fort he most part in the seabed, hereinafter referred to as monopole, which transfers the pitching torque of the support structure primarily through lateral encasing in the seabed and
- The lower section of the structure does not exceed more than about four times the diameter of the monopole (1).

2. Support structure as in claim 1, **characterized by** an additional tower section above the structure, preferably constructed as a pipe-tower.

3. Support structure as in the claims 1 or 2, **characterized by** the diameter of the monopole (1) and the distances between the supports (3;4;5) to one another are selected so that in the transition areas between the supports (3;4;5) and the monopole (1) the forces introduced by the supports (3;4;5) are directed into the monopole (1) without major projections in the flux of forces or with continuous lines of impact of the flux of forces and/or that the support structure also has a cable bracing, whereby the cable bracing consists of multiple, preferably three restraining cables (22;23;24), which are attached to the support structure or an upper section of the tower wit their upper section and are slanted to the seabed (2) where they are anchored.

4. Support structure as in claim 3, **characterized by** the restraining cables (22;23;24) stretched between the tower and the seabed (2) are connected with each other with connecting cables (25;26;27), whereby the traction forces in the connecting cables (25;26;27) cause a bend in the restraining cables (22;23;24) at the point of attachment and the connecting cables (25;26;27) are in a plane as close to horizontal as possible and, in the case of the three restraining cables (22;23;24) preferably form an equilateral triangle.

5. Support structure as in one of the claims 3 or 4, **characterized by** the restraining cables (22;23;24) stretched between the tower and the seabed (2) have additional cables (29;30;31) leading to lower positions of the tower or the upper section of the monopole (1) which in turn are connected with connecting cables (25;26;27).

6. Support structure as in one of the claims 3 to 5, **characterized by** the connecting cables (23;24;25) attached to the restraining cables (22;23;24) leading to lower positions of the tower or the upper section of the monopole (1).

7. Support structure as in one of the claims 3 to 6, **characterized by** rods or other flexible weight-bearing support structure elements with traction, preferably with loose-jointed connections at the connection points of the restraining cables (22;23;24) and connecting cables (25;26;27).are used instead of cables (22;23;24;25;26;27;29;30;31) or a part of the cables.

8. Support structure as in one of the claims 1 to 7, **characterized by** additional bodies are attached as flow inhibitors to dampen vibrations in the support structure and/or the supports (3;4;5) in varying distances to the central axis of the monopole (1).

9. Support structure as in one of the claims 1 to 8, **characterized by** at least one of the supports (3;4;5) being tube-shaped and having a larger diameter than the other supports, whereby this support will preferably be a continuation from the pipe-shape pole through a cone-shaped transitional piece with a cladding around the inside of the tube.

10. Support structure as in one of the claims 1 to 9, **characterized by** the supports (3;4;5) being vertical, preferably connected with diagonal steel braces (7;8;9), whereby the diameter of the monopole (1) and the distances between the supports (3;4;5) is selected so that the distance between the axes of two supports at their bottom ends, or for non-parallel supports the distance to the monopole (1) is an extension of the axes of the supports
- in three supports between the sums from the doubled and the fourfold of cos 30° multiplied with the radius of the monopole (1), plus or less the radius of the support;
- with four supports between the 1.41-fold and the double of the radius of the monopole (1), plus or less the radius of the support,
whereby a connection between the supports (3;4;5) and the monopole (1) is preferably between two connective elements, which are located in the plane of two supports each.

11. Support structure as in one of the claims 1 to 10, **characterized by** the monopole (1) and the supports (3;4;5) made of pipes each being connected by cone-shaped transition pieces, whereby the connection, as cone, is defined by the circumference lines or interfaces of two supports independently of whether they follow the mathematically determined spherical form of a cone.

12. Support structure as in claim 11, **characterized by** the cone-shaped transitional pieces show a notch so that numerous transitional pieces can be slipped into one another.

13. Support structure as in one of the claims 1 to 12, **characterized by** by the placement in the upper third of the monopole (1) or near the lower end of the framework diagonal to the side, of at least one pole, preferably with less than 50°, which preferably transfers the traction and pressure forces through the jacket friction into the floor , whereby preferably the seabed (2) around the monopole (1) is stiffened by suitable measures, in particular with floor injections.

14. Support structure as in one of the claims 1 bis 13, **characterized by** the supports of the frameowrk not being vertical but slanted, whereby the supports are turned spirally to one another, in connection with at least on in the counter-spiral direction brace, which, in case of several straight sections of a support preferably each is connected to the point of the bend between the straight support sections with the supports.

15. Procedure for producing a support construction in accordance with claims 1 to 14, **characterized by**
- Slugs or slabs from steel production are directly shaped into solid rods which are to be used fort eh supports and that receive a conical or cylindrical rod form or profile in a suitable stamping or forging process and/or have a arch-shaped end to produce or provide a connection of the monopole,
- The supports are connected to a framework with rods
- The framework is attached to a monopole with normal means.

16. Procedure in accordance with claim 15, **characterized by** the solid rods are attached to each other in the cross-section so that they can be attached with a small fissure, welding material can be put in the fixture, preferably in the form of a wire and with targeted energy, preferably with laser beams aimed at the fissure, a local heating of the weld and the melting of the welding material is guaranteed.

17. Procedure for erecting the support structure in accordance with claims 1 to 14, **characterized by** the pipe-shaped monopole is driven into the floor by ramming, whereby the seabed will be drilled out in the middle during the insertion of the monopole.

## Revendications

1. Structure portante pour le domaine des technologies marines, notamment pour une centrale éolienne offshore, présentant un mât et des fondations situées en dessous du mât et reliées à celui-ci, **caractérisée en ce que**
- le mât est formé, au moins dans un tronçon situé directement au-dessus des fondations, de plusieurs supports (3;4;5) et entretoises (7;8;9) à effet statique donnant l'aspect d'un mince treillis et permettant le passage de l'eau et de l'air et
- les fondations consistent en un unique pieu (1), désigné ci-après par monopieu, enfoncé profondément dans le fond de la mer qui transmet au fond les moments de tangage de la structure portante avant tout grâce à un renforcement latéral et
- la largeur de la partie inférieure du treillis est environ quatre fois inférieure au diamètre du monopieu (1).

2. Structure portante selon la revendication 1, **caractérisée en ce qu'**un autre élément de mât, réalisé de préférence en mât tubulaire, est disposé au-dessus du treillis.

3. Structure portante selon la revendication 1 ou 2, **caractérisée en ce que** le diamètre du monopieu (1) et les écarts entre les supports (3;4;5) sont choisis de telle façon que, dans le domaine de transition entre les supports (3;4;5) et le monopieu (1), les forces exercées par les supports (3;4;5) sont guidées à l'intérieur du monopieu (1) sans grande discontinuité dans le flux de force ou avec une ligne d'action continue du flux de force et/ou que la structure portante présente en plus un haubanage, le haubanage se composant de plusieurs haubans (22;23;24), de préférence au nombre de trois, qui sont fixés, avec leur extrémité supérieure, au treillis ou à la partie supérieure du mât en étant inclinés par rapport au fond de la mer (2) et ancrés dans celui-ci.

4. Structure portante selon la revendication 3, **caractérisée en ce que** les haubans (22;23;24) tendus entre le mât et le fond de la mer (2) sont reliés les uns aux autres par des câbles de jonction (25;26;27), les forces de traction provoquant dans les câbles de jonction (25;26;27) une allure des haubans (22;23;24) fléchissant au niveau du point de fixation, et les câbles de jonction (25;26;27) se trouvant de préférence à peu près horizontalement dans un seul plan et, formant de préférence un triangle équilatéral en cas de trois haubans (22;23;24).

5. Structure portante selon l'une quelconque des revendications 3 ou 4, **caractérisée en ce que** d'autres câbles (29;30;31) partent des haubans (22;23;24) s'étirant entre le mât et le fond de la mer (2) à des endroits du mât situés plus en profondeur ou dans la partie supérieure du monopieu (1) en étant reliés à leur tour les uns aux autres par des câbles de jonction (25;26;27).

6. Structure portante selon l'une quelconque des revendications 3 à 5, **caractérisée en ce que** d'autres câbles partent des câbles de jonction (23;24;25) mordant sur les haubans (22;23;24) à des endroits du mât situés plus en profondeur ou dans la partie supérieure du monopieu (1).

7. Structure portante selon l'une quelconque des revendications 3 à 6, **caractérisée en ce que**, au lieu d'utiliser des câbles (22;23;24;25;26;27;29;30;31) ou une partie des câbles, on utilise des barres ou d'autres éléments portants flexibles, résistants à la traction, de préférence munis d'articulations au niveau des points de jonction des haubans (22;23;24) et des câbles de jonction (25;26;27).

8. Structure portante selon l'une des revendications 1 à 7, **caractérisée en ce que**, pour amortir les vibrations de la structure portante, des organes supplémentaires sont disposés en tant qu'obstacles au courant et/ou les supports (3;4;5) sont disposés à différents écarts par rapport à l'axe médian du monopieu (1).

9. Structure portante selon l'une quelconque des revendications 1 à 8, **caractérisée en ce qu'**au moins l'un des supports (3;4;5) présente une configuration tubulaire ainsi qu'un diamètre supérieur à celui des autres supports, ces supports prolongeant de préférence le pieu tubulaire par l'intermédiaire d'une pièce intermédiaire conique présentant un chemisage intérieur tubulaire.

10. Structure portante selon l'une quelconque des revendications 1 à 9, **caractérisée en ce que** les supports (3;4;5) sont des profilés en acier droits reliés les uns aux autres de préférence par des entretoises obliques (7;8;9), le diamètre du monopieu (1) et les écarts entre les supports (3;4;5) étant choisis de telle façon que l'écart axial de deux supports à leur extrémité inférieure ou, en cas de supports non parallèles, l'écart entre les axes des supports prolongés par le monopieu (1) est compris,
- dans le cas de trois supports, entre le double et le quadruple de cos 30° multiplié par le rayon du monopieu (1), en rajoutant ou déduisant le rayon du support ;
- dans le cas de quatre supports, entre 1,41 et le double du rayon du monopieu (1), en rajoutant ou déduisant le rayon du support,
les supports (3; 4; 5) et le monopieu (1) étant reliés les uns aux autres par des éléments de jonction au nombre de deux à chaque fois qui sont disposés dans le plan formé par à chaque fois deux supports.

11. Structure portante selon l'une quelconque des revendications 1 à 10, **caractérisée en ce que** le monopieu (1) et les supports (3;4;5) de configuration tubulaire sont reliés les uns aux autres, pour chacun des supports, par des pièces intermédiaires de configuration conique, la jonction des circonférences ou des plans de section de deux supports étant qualifiée de cône indépendamment du fait s'ils correspondent à la conicité d'un cône déterminée mathématiquement.

12. Structure portante selon la revendication 11, **caractérisée en ce que** les pièces intermédiaires coniques présentent un évidemment de telle façon que plusieurs pièces intermédiaires peuvent être déplacées les unes à l'intérieur des autres.

13. Structure portante selon l'une quelconque des revendications 1 à 12, **caractérisée en ce que**, en plus, au moins un pieu, présentant de préférence une inclinaison inférieure à 50° et transmettant au fond de préférence les forces de traction ou les efforts de pression grâce au frottement latéral sur sa périphérie, est disposé au tiers supérieur du monopieu (1) ou près de l'extrémité inférieure du treillis en étant incliné latéralement, le fond de la mer (2) étant consolidé de préférence autour du monopieu (1) grâce à des mesures appropriées, notamment grâce à des injections dans le sol.

14. Structure portante selon l'une quelconque des revendications 1 à 13, **caractérisée en ce que** les supports du treillis ne sont pas disposés verticalement, mais sont inclinés en étant torsadés en spirale les uns par rapport aux autres en étant reliés au moins à une entretoise qui s'étire dans le sens opposé à la spirale et qui, en cas de plusieurs tronçons de support droits, est reliée aux supports de préférence à chaque point de flexion situé entre les tronçons de support droits.

15. Procédé pour la fabrication d'une structure portante conformément aux revendications 1 à 14, **caractérisé en ce que**
- des ébauches ou brames issues de la production de l'acier sont transformées directement en barres pleines qui seront utilisées en supports et prennent la forme de barres coniques ou cylindriques ou de profils au cours d'opérations de laminage ou de forgeage, et/ou dont les extrémités sont transformées en extrémités cintrées prévues pour la fabrication ou le raccordement d'un monopieu,
- les supports sont reliés par des entretoises de façon à former un treillis et
- le treillis est disposé sur un monopieu par des moyens connus en soi.

16. Procédé selon la revendication 15, **caractérisé en ce que** les barres pleines sont apposées les unes contre les autres, section contre section, grâce au fait qu'elles sont fixées les unes aux autres en laissant un mince interstice, que l'interstice est rempli par un métal de soudure, de préférence sous forme de fil, et qu'un apport d'énergie approprié, de préférence des rayons laser orientés vers l'intérieur de l'interstice, assure un réchauffement local de la soudure ainsi que la fonte du métal de soudure.

17. Procédé pour l'édification de la structure portante conformément aux revendications 1 à 14, **caractérisé en ce que** le monopieu de configuration tubulaire est avancé par battage vers le fond situé au ras du pieu, le fond de la mer se trouvant à l'intérieur de celui-ci étant creusé au cours de l'enfoncement du monopieu.
